# EUROPEAN PATENT APPLICATION

(11) **EP 2 464 111 A1**
(43) Date of publication of application: **13.06.2012**
(21) Application number: 10806475.9
(22) Date of filing: 04.08.2010
(51) Int. Cl.: H04N 7/173, H04N 5/445

(54) **CONTENT VIEWING/LISTENING DEVICE AND CONTENT DISPLAY DEVICE**

(30) Priority: 06.08.2009 JP 2009182963
(71) Applicant: Sharp Kabushiki Kaisha, Osaka-shi, Osaka 545-8522 (JP)
(72) Inventor: KOBAYASHI, Tetsuo, Osaka-shi, Osaka 545-8522 (JP); SHIMIZU, Toshinori, Osaka-shi, Osaka 545-8522 (JP); OHMURA, Yoshinori, Osaka-shi, Osaka 545-8522 (JP)
(74) Representative: Müller - Hoffmann & Partner
(86) International application number: PCT/JP2010/063160
(87) International publication number: WO 2011/016476

(57) **Abstract**

A content viewing/listening device for viewing and listening to contents has a content information obtaining section that obtains content information, and a content information display control section that performs control to display a content list on a content display section with respect to each of content categories based on the content information obtained in the content information obtaining section. When receiving an instruction to display the content list, the content information display control section produces, on a content presently being viewed and listened to, a presently-viewed/listened-to-content display in such a form as to be visually recognizable and to indicate that the content is presently being viewed and listened to, and displays the content list so that the content list is divided into portions on a plurality of pages if the content list cannot be displayed on one page.

## Description

### Technical Field

The present invention relates to a content viewing/listening device and a content display device and, more particularly, to a display control technique for managing contents relating to contents obtained from various kinds of content sources and producing an easy-to-see display of the contents.

### Background Art

In recent years, viewable and listenable contents, including ground wave broadcasts, satellite broadcasts and cable television broadcasts, have been increased. As typical content viewing/listening devices, digital broadcast receiving devices (digital television receiving devices, recording/reproduction devices, etc.) may be mentioned. For example, a digital television receiving device enables viewing of and listening to ground wave broadcasts, satellite broadcasts, cable television broadcasts, and the like. If a number of external devices can be connected to a recording/reproduction device, and if viewing and listening can be performed by input switching, contents temporarily recorded on various recording media can be viewed and listened to.

A technique described in Patent Literature 1 shown below includes: managing groups of channels as channel sets in a receiving device that, when a user selects one of channels assigned to broadcasts or groups of information, receives the broadcast or the group of information corresponding to the selected channel and presents this broadcast or information to the user; storing management data for managing the channels in the channel sets; managing the channel sets by changing the channel sets based on the management data; and handling even channels for net contents from the Internet or the like collectively on a channel set-by-channel set basis by this management, whereby equally handling all the channels without dividing the channels is enabled even when the number of channels is increased.

Patent Literature 2 discloses detecting a start of zapping processing, i.e., performing viewing and listening while frequently switching channels with a remote control unit or the like, in a device capable of reproduction of programs, and displaying a menu view in which a mark is attached to a button for the channel from which zapping has started. If this technique is used, the facility with which a channel from which zapping is started is identified is improved and the possibility of losing a channel from which zapping is started, which is a problem with zapping, is reduced.

### Citation List

### Patent Literature

Patent Literature 1: International Publication No. WO 2007/043483
Patent Literature 2: JP Patent Publication (Kokai) No. 2007-19695.

### Summary of Invention

### Technical Problem

When viewing and listening by obtaining contents from a number of content sources, as described above, is enabled, the need increases to check from which content source a content presently being viewed and listened to is obtained and to check contents obtainable from other content sources.

The conventional techniques including that in the Patent Literature 1 shown above, however, do not reduce the difficulty in performing in a unified way operations on various events including viewing of contents from a number of contents sources including the Internet.

With respect to the technique described in Patent Literature 2 shown above, a method of producing a display when a "zapping" operation is performed by changing a program viewed and listened to is described. However, no mention is made of a case where not a program viewed and listened to but a program table is changed. That is, there is a problem that, for example, in a situation where a program table is used when a program is viewed and listened to, a user cannot know from the program table which program he or she is presently viewing and listening to.

An object of the present invention is to provide a technique to enable selecting a content to view and listen to while identifying a content presently being viewed and listened to in a content viewing/listening device that performs in a unified way operations on contents from a number of available content sources including Internet contents.

### Solution to Problem

According to the present invention, in a case where a user uses a content menu while viewing and listening to contents, a mark is displayed on the content presently being viewed and listened to (current mark). Further, even when a category changing operation (broadcast program table → net contents, for example) is made on the content menu view, a page containing the content presently being viewed and listened to is displayed if a category menu including the content presently being viewed and listened to is displayed. Also, the current mark is displayed on the content presently being viewed and listened to.

According to one aspect of the present invention, there is provided a content viewing/listening device for viewing and listening to contents, including a content information obtaining section that obtains content information, and a content information display control section that performs control to display a content list on a content display section with respect to each of the content categories based on the content information obtained in the content information obtaining section, wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and displays the content list so that the content list is divided into portions on a plurality of pages if the content list cannot be displayed on one page.

There is also provided a content viewing/listening device for viewing and listening to contents, comprising a category-by-category content information obtaining section that obtains content information with respect to each of content categories that are kinds of viewable and listenable contents, and a content information display control section that performs control to display a content list on a content display section with respect to each of the content categories based on the content information with respect to each of the content categories obtained in the category-by-category content information obtaining section, wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and displays the content list so that the content list is divided into portions on a plurality of pages if the content list with respect to one of the content categories cannot be displayed on one page.

It is preferable that the content information display control section maintain among the plurality of pages a page construction in which the presently-viewed/listened-to-content display is produced. That is, when a content, for example, on the second page among the plurality of pages is presently being viewed and listened to, the presently-viewed/listened-to-content display is performed only on the second page with respect to the content presently being viewed and listened to. Also, at the time of return to the pages after switching to a view on which details of the content are displayed, the presently-viewed/listened-to-content display is performed only on the second page with respect to the content presently being viewed and listened to. The constructions on the pages may be made identical to each other to make the pages easy to see. If the first and second pages contain the same number of contents (e.g., 5), the constructions are similar to each other and the pages are easy to see.

Also, specifically, the content information display control section displays the content list in an empty region formed by scaling a viewing/listening region in the display section, is capable of switching to or from a full-screen display, and updates the presently-viewed/listened-to-content display to a content at a cursor position at the time of switching to the full-screen display.

It is preferable to provide the content list with content metainformation, e.g., content attribute information such as program channels, net URLs, program titles, and broadcasting time periods. The content list can also be said to be a list on which content attribute information items are collected on a content-by-content basis.

The present invention can also be implemented as a content viewing/listening device for viewing and listening to contents, including a content information obtaining section that obtains content information with respect to each of content categories that are kinds of viewable and listenable contents, and a content information display control section that performs control to display a content list on a content display section with respect to each of the content categories based on the content information with respect to each of the content categories obtained in the content information obtaining section, wherein the content information display control section displays content category icons for producing a list display with respect to each of the content categories, displays the content list with respect to each of the content categories associated with the content category icons, and produces, on the category icon for the category corresponding to a content presently being viewed and listened to, a presently-viewed/listened-to-content-category display in such a form as to be visually recognizable and to indicate that the category corresponds to the content presently being viewed and listened to. In the above-described metainformation display means, category transitions may be realized by using tabs according to the kinds of contents.

Also, the content information display control section may produce, in the content list, on the content presently being viewed and listened to, the presently-viewed/listened-to-content display in such a form as to be visually recognizable and to indicate that the content is presently being viewed and listened to. It is preferable to maintain the presently-viewed/listened-to-content-category display among the plurality of categories.

Also, preferably, the content information display control section displays the content list in an empty region formed by scaling a viewing/listening region in the display section, is capable of switching to or from a full-screen display, and updates the presently-viewed/listened-to-content display to a content at a cursor position at the time of switching to the full-screen display.

Preferably, the content categories are discriminated by means of content sources that are sources from which contents are obtained. The content groups include an optical disk medium, broadcasting and input switching of an external device.

Also, preferably, the content information obtaining section includes a content information obtaining section that obtains content information including information on sources from which the contents in the content groups obtained from the content viewing/listening device are obtained, and a net content information obtaining section that obtains net content information on net contents obtained via the Internet, including a URL of a net content server, and the content information display control section performs control for producing one menu display into which content lists based on the groups of content information obtained by the content information obtaining section and a net list based on the net content information obtained by the net content information obtaining section are unified.

The present invention also includes a content viewing/listening device for viewing and listening to the contents, including a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of returning after making a transition to a page on which detailed information about a content selected from the content list is displayed, the content information display control section maintains a page construction in which the presently-viewed/listened-to-content display is produced. That is, in a case where a content information item in the content list is selected to make a transition to another view on which details of the selected item or the like are displayed, and where a return to the display before the transition is made by means of a return icon or the like, maintaining the corresponding page construction including the existence/nonexistence of a display indicating that content viewing/listening is being performed and the content list construction provides ease of understanding.

The present invention also includes a content viewing/listening device for viewing and listening to the contents, including a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and performs control so that no transition is made from a list display view for any of the categories other than the category presently being viewed and listened to to a content list display view not containing any list display of the content presently being viewed and listened to in the category presently being viewed and listened to.

The present invention also includes a content viewing/listening device for viewing and listening to contents, including a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of making a transition to the category of the content presently being viewed and listened to in moving between the categories, the content information display control section performs control so that a page containing the content presently being viewed and listened to is displayed.

The present invention also includes a content viewing/listening device for viewing and listening to contents, including a content information obtaining section that obtains content information, and a content information display control section that performs control to display a content list on a content display section with respect to each of the content categories based on the content information obtained in the content information obtaining section, wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of returning after making a transition to a page on which detailed information about a content selected from the content list is displayed, the content information display control section performs control so that a return to a transition-starting-point content list display view is made.

According to another aspect of the present invention, there is provided a content list display method including a content information obtaining step of obtaining content information in a content viewing/listening device for viewing and listening to contents, and a content information display control step of performing control to display a content list on a content display section with respect to each of the content categories based on the content information obtained in the content information obtaining step, wherein the content information display control step includes a step of producing, upon receiving an instruction to display the content list, on a content presently being viewed and listened to, a presently-viewed/listened-to-content display in such a form as to be visually recognizable and to indicate that the content is presently being viewed and listened to, and displaying the content list so that the content list is divided into portions on a plurality of pages if the content list cannot be displayed on one page.

There is also provided a content list display method including a content information obtaining step of obtaining content information with respect to each of content categories that are kinds of contents viewable and listenable in a content viewing/listening device for viewing and listening to contents, and a content information display control step of performing control to display a content list on a content display section with respect to each of the content categories based on the content information with respect to each of the content categories obtained in the content information obtaining step, wherein the content information display control step includes a step of producing, on a content presently being viewed and listened to, a presently-viewed/listened-to-content display in such a form as to be visually recognizable and to indicate that the content is presently being viewed and listened to, and displaying the content list so that the content list is divided into portions on a plurality of pages if the content list with respect to one of the content categories cannot be displayed on one page.

There is also provided a content list display method including a content information obtaining step of obtaining content information with respect to each of content categories that are kinds of contents viewable and listenable in a content viewing/listening device for viewing and listening to contents, and a content information display control step of performing control to display a content list on a content display section with respect to each of the content categories based on the content information with respect to each of the content categories obtained in the content information obtaining step, wherein the content information display control step includes a step of displaying content category buttons for producing a list display with respect to each of the content categories, displaying the content list with respect to each of the content categories associated with the content category buttons, and producing, on the category button for the category corresponding to a content presently being viewed and listened to, a presently-viewed/listened-to-content-category display in such a form as to be visually recognizable and to indicate that the category corresponds to the content presently being viewed and listened to.

The present invention also includes a content list display method including a content information obtaining step of obtaining content information in a content viewing/listening device for viewing and listening to contents, and a content information display control step of performing control to display a content list on a content display section with respect to each of the content categories based on the content information obtained in the content information obtaining step, wherein the content information display control step includes producing, upon receiving an instruction to display the content list, on a content presently being viewed and listened to, a presently-viewed/listened-to-content display in such a form as to be visually recognizable and to indicate that the content is presently being viewed and listened to, and performing control so that no transition is made from a list display view for any of the categories other than the category presently being viewed and listened to to a content list display view not containing any list display of the content presently being viewed and listened to in the category presently being viewed and listened to. Method inventions made by replacing the components of the above-described devices with steps are also included in the present invention.

The present invention may also be a program for making a computer execute any of the above-described content list display methods and may be a computer readable recording medium on which this program is recorded.

This specification includes the contents written in the specification and/or drawings of Japanese Patent Application No. 2009-182963, which is a basis for the priority of the present application.

### Advantageous Effect of Invention

According to the present invention, with the content viewing/listening (reproducing) device, even if there are many kinds of reproducible contents, selection of a content to be viewed and listened to while making page transitions can be performed by recognizing information without trouble even when a page transition for information (metainformation) about a content presently being viewed and listened to is made. Thus the device of the present invention has the advantage of enabling comfortably performing operations relating to content viewing/listening.

### Brief Description of Drawings

[Figure 1] Figure 1 is a functional block diagram showing a digital television receiving device as an example of a content viewing/listening device according to an embodiment of the present invention.
[Figure 2] Figure 2 is a diagram showing an example of a data structure of a net content list managed in the contents viewing/listening device according to the embodiment of the present invention.
[Figure 3] Figure 3 is a diagram showing an example of a net content list (program) obtained from an external server through the Internet.
[Figure 4] Figure 4 is a diagram showing an example of the construction of an actual program as the JavaScript (R) shown in Figure 2, and showing an example of description of script 57 in Figure 2.
[Figure 5] Figure 5 is a diagram showing details of a display on a display unit in the content viewing/listening device.
[Figure 6] Figure 6 is a diagram showing an example of display of an on-screen table display in a case where broadcasts are selected as a content source to display a content list in table form.
[Figure 7] Figure 7 is a diagram showing an example of an on-screen table display in a case where net contents provided through the Internet are selected as a content source to display a content list in table form.
[Figure 8] Figure 8(a) is a diagram showing an example of display of an on-screen table display in a case where contents provided by input switching from a BD recorder as an external device are selected as a content source to display a content list in table form. Figure 8(b) is a diagram showing another example of list display in a case where input switch button 71b is pressed.
[Figure 9] Figures 9(a) to 9(m) are diagrams showing examples of caution displays produced in a list display region in a side region.
[Figure 10] Figure 10 is a functional block diagram relating to content list display in the content viewing/listening device according to the present embodiment.
[Figure 11] Figure 11 is a diagram showing an example of appearance construction of a remote control unit.
[Figure 12] Figure 12 is a flowchart showing the flow of operation according to the script at the time of initial display.
[Figure 13] Figure 13 is a flowchart showing the flow of processing for updating a list display of a source category.
[Figure 14] Figure 14 is a diagram showing the flow of display processing accompanied with an update, i.e., a flowchart showing the flow of processing including obtaining a provider (content server) that provides contents such as shown in Figure 3.
[Figure 15] Figure 15 is a diagram showing a menu in a list display in a content viewing/listening device according to a second embodiment of the present invention.
[Figure 16] Figure 16 is a functional block diagram of the content viewing/listening device according to the present embodiment, corresponding to Figure 10.
[Figure 17] Figure 17 is a diagram showing an example of an operation in a case where a content list display as a content menu displayed in side region 22d of the display section in the content viewing/listening device according to the present embodiment is produced.
[Figure 18] Figure 18 is a state transition diagram of the content viewing/listening device according to the present embodiment.
[Figure 19] Figure 19 is a flowchart showing the flow of processing for a category changing operation.

### Reference Signs List

- 6: Overall control section (CPU)
- 6a: Display control section
- 6b: Audio control section
- 7: Memory
- 7a: Control program storage section (script storage section)
- 7b: Net content information accumulation section
- 10: Content viewing/listening device
- 11: Analog broadcast antenna
- 12: Analog tuner section
- 13: Digital broadcast antenna
- 14: Digital tuner section
- 15: Content data receiving section
- 16: Content data management section
- 19: Video processing section
- 20: Synchronizing section
- 21: Video output section (display, content output means)
- 25: Audio processing section
- 26: Content metadata management section
- 28: Audio output section (speaker, content output means)
- 30: External device
- 31: External input section
- 32: Recording/reproduction section
- 34: Communication control section
- 34a: Network communication section
- 35: Remote control light receiving section
- 36: Input means
- 41: Internet
- 43: External server
- 71: Source category display region
- 73: Content list-table display region
- 73a: Presently-viewing/listening mark
- 251: Content information obtaining section
- 251a: Broadcast content information obtaining section (broadcast content information obtaining means)
- 251b: input-switching content information obtaining section (input-switching input content information obtaining means)
- 251c: BD content information obtaining section (storage medium content information obtaining means)
- 251d: Net content information obtaining section (net content information obtaining means)
- 256: Net information obtaining control section
- 331c: Content button or tab
- 332: Presently-viewed/listened-to-category mark
- 241: Next button
- 301: Content information display view
- 305: Program information
- 307: Performer information

### Description of Embodiments

A digital television receiving device will be described below as an example of a content viewing/listening device including a content display technique according to a first embodiment of the present invention (hereinafter referred to as "content viewing/listening device").

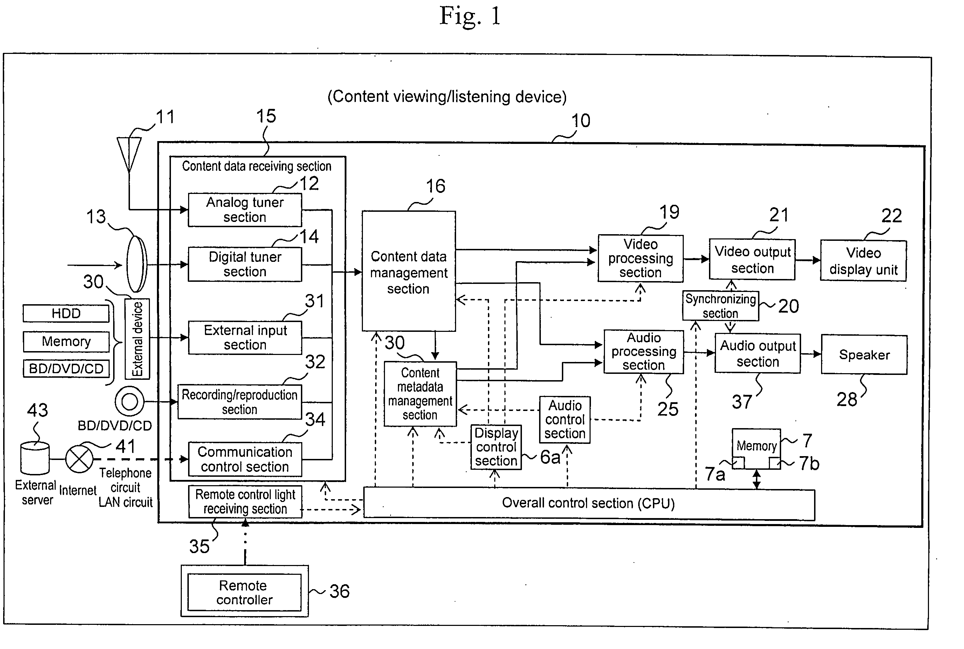

Figure 1 is a functional block diagram showing a digital television receiving device as an example of a content viewing/listening device according to the present embodiment. As shown in Figure 1, a content viewing/listening device (television receiving device) 10 according to the present embodiment is arranged to be capable of obtaining contents from a number kinds of contents sources. That is, the content viewing/listening device according to the present embodiment can be supplied, for example, with an antenna 11 for analog broadcasts through which analog television broadcasts are received, an antenna 13 for digital broadcasts through which digital television broadcasts are received, stored contents reproduced by an external device 30 driving a recording medium such as a hard disk drive (HDD), a memory device, a BD (Blu-Ray Disc), a DVD disk or a CD, contents directly obtained from an optical medium, net contents obtained from an external server through the Internet 41 by using a telephone circuit, a LAN circuit or the like.

Each of the above-described contents undergoes receiving processing in a content data receiving section 15. In the content data receiving section 15, receiving processing is performed with respect to the above-described various kinds of contents by an analog tuner section 12, a digital/analog tuner section 14, an external input section 31, a recording/reproduction section 32 and a communication control section 34.

Each of the various kinds of content data having undergone receiving processing in the content data receiving section 15 is input to a content data management section 16 that manages content data. In the content data management section 16, the content data is separated into video data, audio data and content metadata. The video data is output to a video processing section 19, the audio data to an audio processing section 25, and the content metadata to a content metadata management section 26.

An overall control section (CPU) 6 performs overall control on a display control section 6a that performs display control through the video processing section 19, an audio control section 6b that performs audio control through the audio processing section 25, the content data management section 16, the content metadata management section 26, and so on. In actuality, the control is performed by a program in a control program storage section 7a in a memory 7. Reference character 7b denotes a net content information accumulation section described later. The content metadata management section 26 manages content information on kinds of content, contents makers, etc. The content data management section 16 manages, for example, input and output of data on details of contents.

Under the management by the content data management section 16 and the content metadata management section 26, video data processed by the video processing section 19 and audio data processed by the audio processing section 25 are synchronized in a video output section 21 and an audio output section 37, respectively, by a synchronizing section 20, and sent to a video display unit (LCD or the like) 22 and an audio output section (speaker) 28, respectively, to be output. A remote control light receiving section 35 receiving commands from a user through a remote control unit 36 conducts control of display and audio or the like by means of the CPU 6 based on commands relating to various operations.

The video display unit (LCD or the like) 22 is a liquid crystal display unit having a screen size of 16 : 9 (1920 x 1010 dots). In the content viewing/listening device (television receiving device) 10 shown in Figure 1, scaling display is performed by the liquid crystal display unit 22. The television receiving device 10 has the CPU 6 and the memory 7 connected to a bus, and the operation of the television receiving device 10 is controlled by the CPU 6 and various control programs stored in the memory 7. That is, the television receiving device 10 shown in Figure 1 is controlled by a computer system including the CPU 6, and the programs for operating the television receiving device by means of the computer system are stored in the memory 7. The liquid crystal display unit having a screen size of 16 : 9 is not exclusively used, as already described.

The memory 7 is ordinarily constituted by a RAM. The memory 7, however, may include a ROM portion. The memory 7 may also include a rewritable flash memory or the like. In the memory 7, an OS for operating the CPU and various kinds of control software or the like are stored and data on program information, such as EPG data received through broadcasting waves, and OSD image data required for OSD display, or the like is stored. The memory 7 also has a work area serving as a work memory necessary for various control operations.

In the television receiving device 10, the analog tuner section 12 is provided as well as the digital tuner section 14 to enable receiving of analog broadcasts. To the external input section 31, various external devices 30 including a HDD, a solid-state memory such as an SD card, and a disk drive using a BD (Blu-Ray Disc), a DVD, a CD or the like can be connected. A BD/DVD/CD recording/reproduction section 32 is also incorporated in the main body of the television receiving device 10. Further, an IP broadcast tuner section not shown in the figure is provided to enable receiving of IP broadcasts.

The analog tuner section 12 selects an analog television broadcast signal received through the analog broadcast receiving antenna 11 and selects a channel according to a channel selection command from the CPU 6. A received signal from the analog tuner section 12 is divided into an audio signal and a video signal by an AV switch. The video signal is input to the video processing section 19, while the audio signal is input to the audio processing section 25.

The digital tuner section 14 selects a digital television broadcast signal received through the digital broadcast receiving antenna 13 and selects a channel for receiving according to a channel selection command from the CPU 6. A received signal from the digital tuner section 14 is demodulated in a digital demodulation section in the video processing section 19 and sent to a demultiplexing section (DMUX). Thus, an ordinary configuration is provided.

The IP broadcast tuner section, not shown in the figure, selects an IP broadcast received through the communication control section 34 connected to a telephone circuit, a LAN or the like. The IP broadcast tuner section selects a particular IP broadcast received according to a channel selection command from the CPU 6 and sends the output to the demultiplexing section (DMUX).

The demultiplexing section (DMUX) separates multiplexed video data and audio data input from the digital demodulation section or the IP broadcast tuner section, sends the video data to a video decoding/capturing section, and sends the audio data to an audio decoding section. Further, the demultiplexing section (DMUX) extracts data such as DPG data contained in the broadcast signal and sends the extracted data to an EPG/OSD/programming processing section. If necessary, the broadcast wave signal extracted by the demultiplexing section (DMUX) is recorded on the memory 7 under write control performed by the CPU 6.

The video decoding/capturing section decodes the video data separated by the demultiplexing section (DMUX) and captures video information contained in the video data as a still image. The image signal decoded by the video decoding/capturing section is sent to a video selector section. A video signal from the analog tuner section 12 is input to the video selector section, as already described. A video signal from the external input section 31 is also input to the video selector section. The video selector section selects and outputs one of the input video signals according to a control signal from the CPU 6 and sends the selected video signal to the image processing section 19.

In the video processing section 19, image processing including, for example, noise reduction processing, sharpness adjustment and contrast adjustment is performed on the input video signal and converts the video data so that the video signal is optimized for the video (liquid crystal) display unit 22.

The display control section 6a is a section including a drive circuit for displaying received video data on the video (liquid crystal) display unit 22. The display control section 6a sends to the video (liquid crystal) display unit 22 data on an electronic program table (EPG: Electronic Program Guide) or OSD (on-screen display) data from the EPG/OSD/programming processing section, added by an addition circuit, as well as the video data from the video processing section 19. The video (liquid crystal) display unit 22 displays the received image data on the screen.

The above-described EPG/OSD/programming processing section further performs processing for scaling display according to the present invention, which will be described later in detail. The audio decoding section decodes audio data separated by the demultiplexing section (DMUX). The audio decoding section sends the decoded audio signal to the audio selector section.

The audio selector section receives the audio signal from AV switch section, the audio signal from the external input signal and the audio signal from the audio decoding section, selects the audio signal corresponding to the video signal selected by the video selector section under the control of the CPU 6, and sends the audio signal to the audio output section 37. The audio output section 37 converts the received audio signal into a signal most suitable for reproduction with the speaker 28 and outputs the converted signal to the speaker 28.

The remote control light receiving section 35 receives an optical signal from the remote controller 36 (hereinafter referred to as "remote control unit 36") to accept a control signal from the remote control unit 36. Commands from a view/listener, for example, to make a transition to scaling display, a selection from various buttons and determination of the selection at the time of scaling display are given through the remote control unit 36.

The EPG/OSD/programming processing section prepares an electronic program table based on EPG data periodically updated and saved, and renders OSD data stored in the memory 7 in advance. The OSD data is, for example, data for rendering various sorts of information, such as a setting menu view, a sound volume gauge, the present time and channels to be selected, stored in the memory 7 in advance. The EPG/OSD/programming processing section performs program-preselecting programming processing or the like by using the above-mentioned electronic program table.

Further, the EPG/OSD/programming processing section executes scaling display on the screen in cooperation with the CPU 6. That is, at the time of scaling display, the EPG/OSD/programming processing section produces a scaling display of an input image in a video area, reads out from the memory 7 data to be displayed in a top region, a side region and a bottom region described later, and renders this data on an on-screen view displayed on the display unit. The EPG/OSD/programming processing section further executes functions assigned to various "buttons" selected according to inputs from the remote control 36, and controls the display based on the result of execution of each function.

The communication control section 34 performs so as to establish communication via a network such as a telephone line, a LAN or the Internet.

The display control section 6a controls, for example, an electronic program table (EPG) prepared based on content information including program information, a content list display according to the present embodiment described later, and various displays produced by operations in the content list display. For this, for example, with respect to a digital broadcast, program information data to be displayed, for example, in a program table is obtained based on an EIT (Event Information Table), i.e., information describing program titles, program contents, broadcasting times and other attributes.

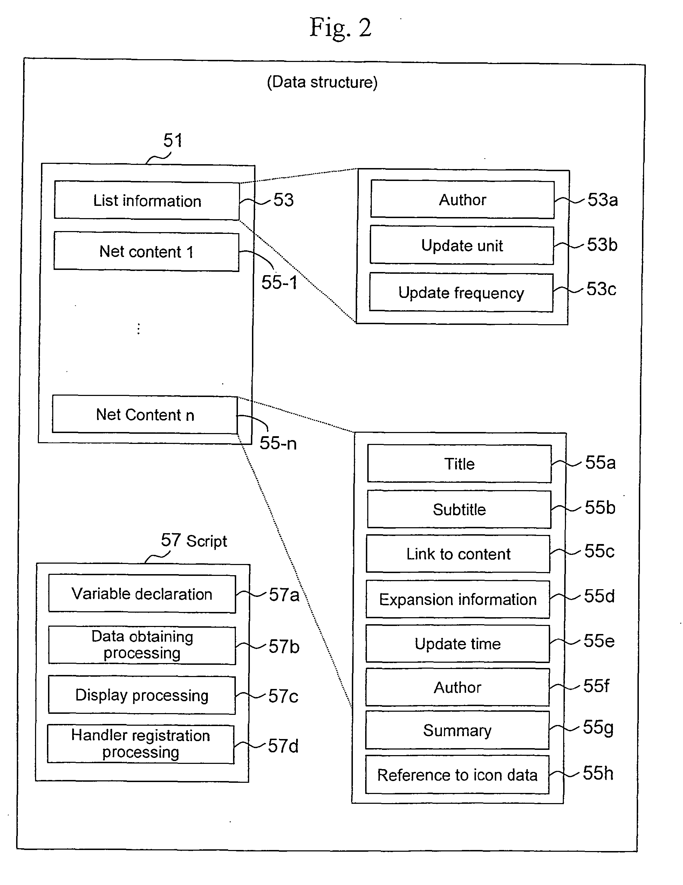

Figure 2 is a diagram showing an example of a data structure of a net content list managed in the contents viewing/listening device according to the present embodiment. As shown in Figure 2, a data structure of a net content list 51 managed in the contents viewing/listening device is managed, for example, in a state of being constituted of a number of net content groups 55-1 to 55-n (n: a positive integer) and list information 53 as a header for the net content groups 55-1 to 55-n. The list information 53 includes, for example, as information (different from contents) associated with contents, information on authors 53a of the contents, an update unit 53b and an update frequency 53c. The update unit 53b and the update frequency 53c indicate intervals at which the net content list 51 is updated. For example, in a case where the update unit 53b is weekly and the update frequency is 1, they indicate that the net content list 51 is updated one time a week. The update frequency is update timing on the update unit basis, which includes information, e.g., "one time in a week", or information on a last update time.

Each net content 55-n includes a title 55a, a subtitle 55b, a link 55c (a URL or the like) to a content, extension information 55d, a (final update time 55e, an author 55f, a summary 55g and a reference 55h to an icon data for representation of the content. In this example, the content itself is stored in an external server, a recording medium, or the like and associated by a link.

A script 57 includes a variable declaration 57a, data obtaining processing 57b, display processing 57c and handler registration processing 57d for registering a handler which is an expression of an action to be executed when a file is called. Ordinarily, each of these processings is a piece of processing executed by a piece of software.

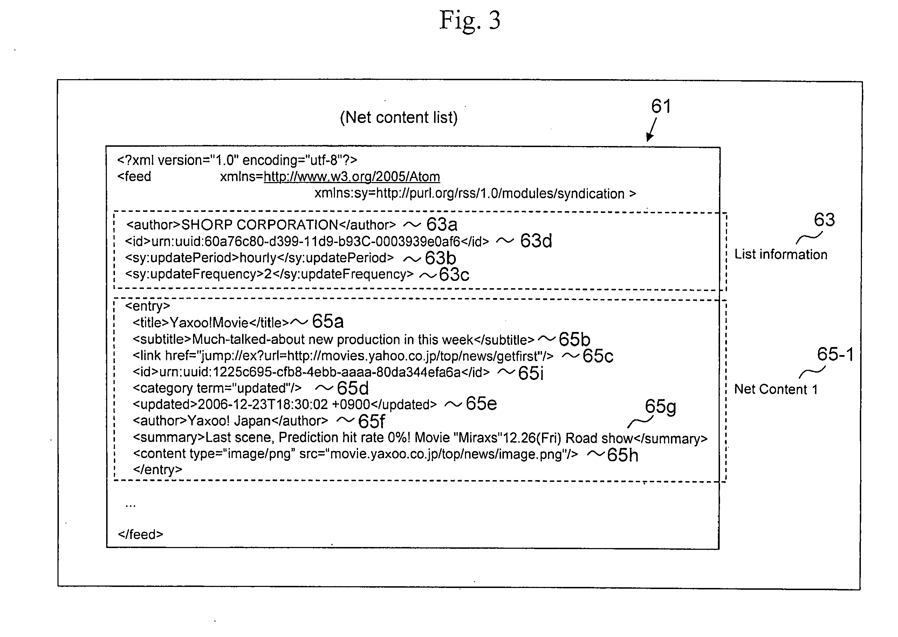

The data structure of the content list shown in Figure 2 is an ordinary structure representing a net content list. In the present embodiment, contents other than net contents are handled in this format to enable net contents and contents other than the net contents to be handled in a unified way. Figure 2 is not a diagram showing a data structure with respect to one net content but a diagram showing a data structure of a plurality of net contents 1 to n, i.e., a diagram schematically showing a structure of details described below with reference to Figure 3.

Figure 3 is a diagram showing an example of a net content list (program) obtained from an external server through the Internet. Figure 3 shows an example of a concrete description of the net content list 51 shown in Figure 2. In this net content list 61, a URL for a list owner is described in an XML tag form in a header portion. In list information 63, a list editor's name 63a, an ID 63d for the list, an update period (e.g., one hour) 63b and an update frequency (e.g., two times (in an hour)) 63c are described.

Under the list information 63, information about details of net contents from (1 to n) 65-1 to 65-n (net content (1) 65-1 shown here) indicated in the list information 63 is described. In this example, a title 65a, a subtitle 65b, a URL 65c for the content, an ID 65i for an URL to be accessed for obtaining the content, a term 65d as a category term representing information relating to an update, a latest update time 65e, author information 65f, a summary 65 of the details of the content and the type 65f of the content, e.g., information as to where the content is obtained as which type (moving image or the like) are described. These information items correspond to those in the example of the construction of the net content 55-n shown in Figure 2. Subsequently, groups of information on net contents (2 to n) 65-2 to 65-n are successively described.

Obtaining a different content, i.e., a broadcast content or a content from a medium, requires an access destination, such as a kind of broadcast network and a channel ID in the case of obtaining from broadcasting, or a medium identification number in the case of obtaining from a medium, as does obtaining a net content. Providing net contents so that the net contents have the above-described data structure including URL information as access destinations for the net contents enables each content to be accessed when the content is selected, as in the case with other broadcast contents and contents obtained from mediums, thus enabling operations for selecting, viewing and listening various contents including net contents by means of channel IDs or URLs based on a channel list described later to be performed in a unified way.

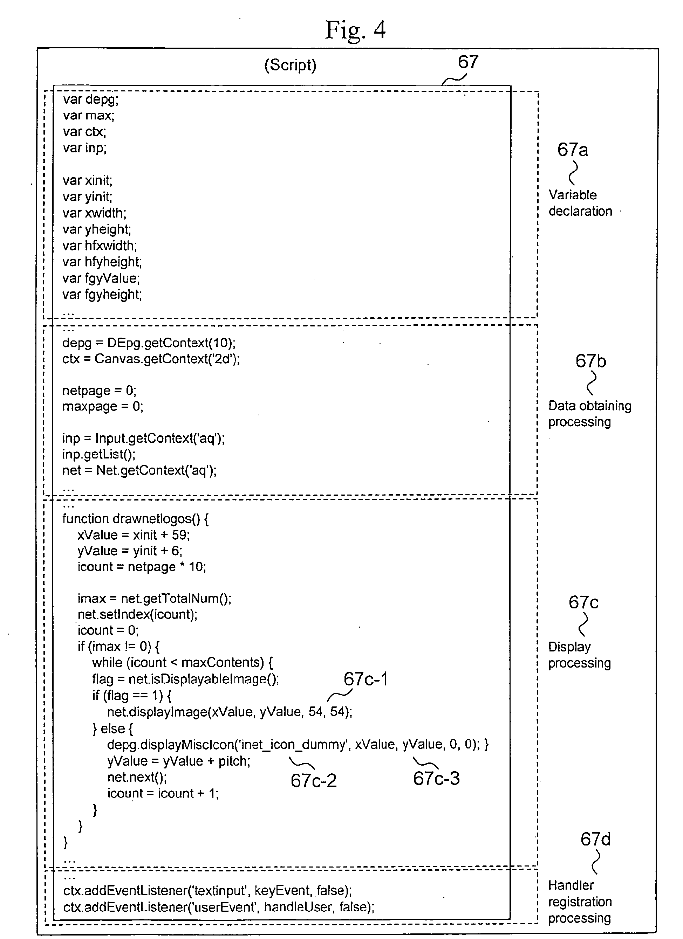

Figure 4 is a diagram showing an example of the construction of an actual program as the JavaScript (R) shown in Figure 2, and showing an example of description of the script 57 in Figure 2. A variable declaration 67a is a portion for defining a variable for data obtaining processing, in which values (such as a starting point, the width and the height) of a region represented by (xinit, yinit), indices for a category and an item to which focus is being applied, the number of pages, etc., are defined. A data obtaining processing program 67b is an example of description of a program for executing actual data obtaining processing. For example, an instruction to perform an operation for obtaining information on a program in a broadcast presently being viewed and listened to is issued (depg = DEpg. getContext(10);) or an instruction to obtain a net content list (net = Net. getContext('aq');) is issued. A display processing program 67c is a program in which a description as to how a content table is displayed is made. By this program, analysis on this portion is made and a content list described later is displayed. More specifically, determinations are made based on descriptions indicated by reference characters 67c-1 to 67c-3 as to how a content list and other items are displayed according to a key operation and with what icon the content list display position on the displayed on-screen view is indicated.

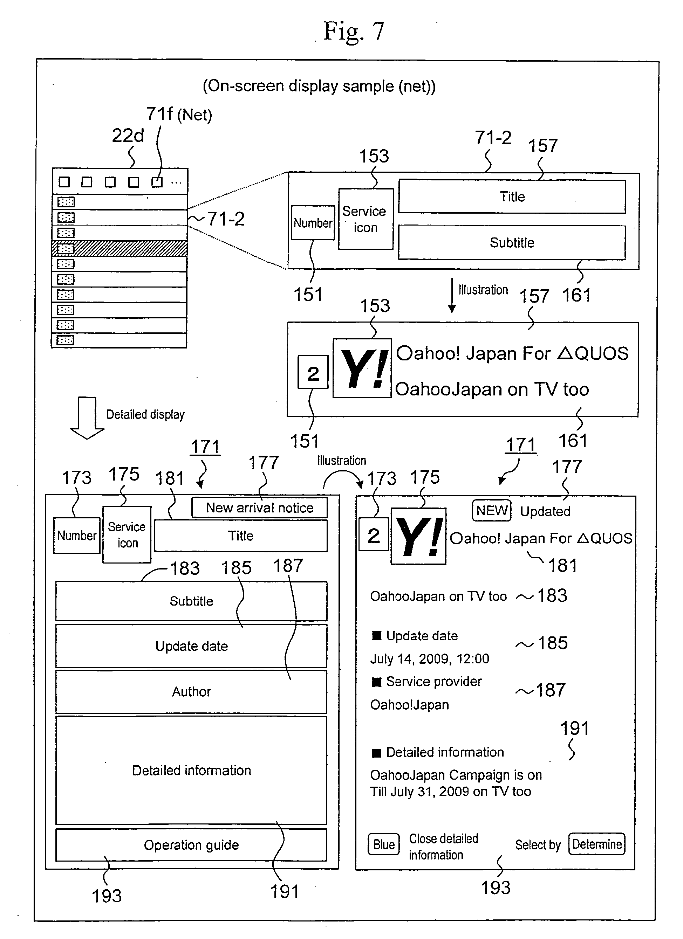

For example, a description: "function drawnetlogos() {...}" indicated by reference character 67c is an instruction to perform processing for displaying a service icon 153 shown in Figure 7. In the description, the total number of net contents contained in a net content list is first obtained ( "imax = net.getTotalNum();" ). If one or more net contents are contained ( "if (imax !=0)" ), display processing is performed. In course of display processing, the icon designated in the net content list is obtained ( "flag = net.isDisplayablemage();" ). If the icon is obtained ( "if (flag == 1)" ), the obtained service icon 153 is displayed in a size with a width 54 and a height 54 at the position of coordinates (xValue, yValue) ( "net.displaylmage(xValue, yValue, 54, 54);" ). If the icon cannot be obtained ( "} else {" ), a default icon is displayed at the position of coordinates (xValue, yValue) ( "depg.displayWisclocon('net_icon_dummy', xValue, yValue, 0, 0);" ). After the completion of display processing, the service icon display y-coordinate is updated (yValue = yValue + pitch) and the next net content is set as an object to be displayed ( "net.next(); icount = icout + 1;" ). This processing is repeated for displayed items ( "while(icount = icount + 1;" ) to display all the service icons 153 contained in the net content list.

In a handler registration program 67d, an example of a description corresponding to the handler registration processing 57d for registering a handler which is an expression of an action to be executed when a file is called is shown. For example, by a description ctx.addEventListener( 'textinput', keyEvent, false);, a function keyEvent is registered as a handler for a situation where a key operation is performed. Also, by a description ctx.addEventListener( 'userEvent', handleUser, false);, a function handleUser is registered as a handler for a situation where a broadcast content or a net content list is updated.

The arrangement is such that the description of JaveScript (R) as described above enables freely performing display and operations relating to contents including a content list.

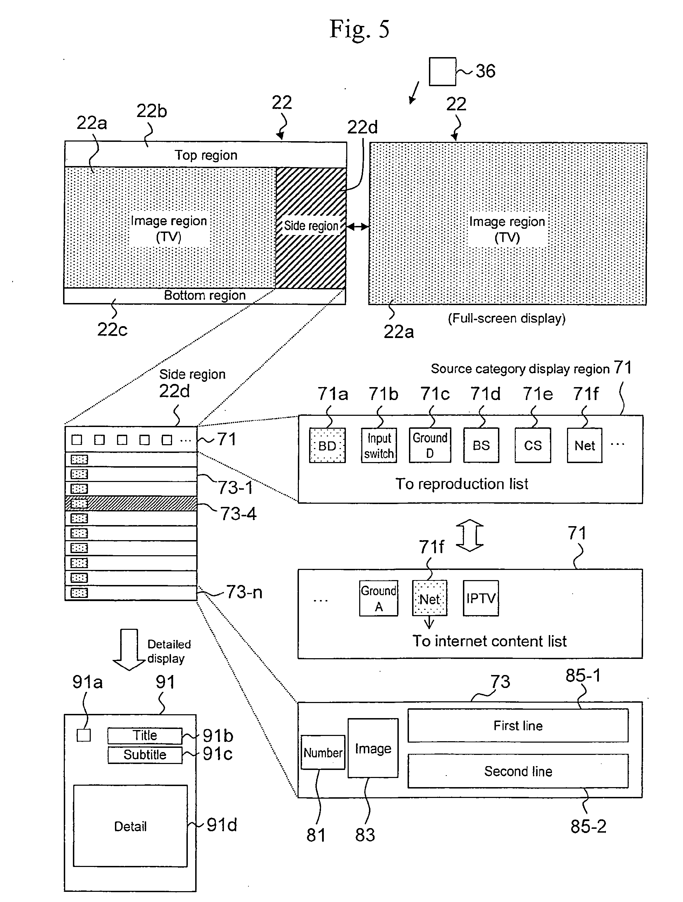

Display of an actual content list using the above-described content data and programs and an example of operations through a user interface will be described below in detail. Figure 5 is a diagram showing details of a display on the display unit 22 of the content viewing/listening device. As shown in Figure 5, the display unit can be changed by an operation on the remote control unit 36 between a display mode for a full-screen display 22a in which the image region extends substantially through the entire screen of the display unit 22 (on the right-hand side, a TV image, for example, being displayed) and a simultaneous menu display mode in which, as shown on the left-hand side, a top region 22b, a bottom region 22c and a side region 22d, for example, are formed as marginal regions formed by reducing the image region 22a while maintaining, for example, a wide screen aspect ratio by scaling, and in which various kinds of information can be displayed in these marginal regions (on the left-hand side).

A content list display technique using the side region 22d will be concretely described below. However, no restriction is imposed on selection as to in which area a content list is displayed. In the side region 22d, for example, there are provided a source category display region 71 in which a number of icons for displaying content lists with respect to the categories of sources of contents are provided as a GUI, and a content list-table display region 73 (73-1 to 73-n) in which a table (list) display of contents from one of the source categories selected through the icon in the source category display region 71 is produced in a region below the source category display region 71.

In the source category display region 71 formed so as to extend laterally, buttons associated with the sources of contents, for example, are laterally arranged. In this region, a BD (Blu-Ray Disc) icon 71a, an input switch icon 71b, a ground digital broadcast icon (ground D) 71c, a BS digital (satellite) broadcast icon (BS) 71d, a CS digital (communication satellite) broadcast icon (CS) 71e, a net content icon 71f and other icons are arranged in one row. As described above, net contents are also provided so as to have the same data structure as that of the other contents, thereby enabling the net contents to be processed in the same way as the other contents. For example, when the BD icon 71a is selected (dot-patterned), a list of contents stored on a BD medium presently inserted in the BD drive in the main unit is entirely displayed in table form in the column direction in the content list-table display region 73. Also, when the net icon 71f is selected (dot-patterned) as shown in the figure below, a list of Internet contents selected in an external server presently connected via the Internet, for example, is displayed in table form in the column direction in the content list-table display region 73 based on the data structure as shown in Figures 2 and 3.

More specifically, in the display region 73 in one row in the list, a number 81 as an ordinal number in 1, 2, and so on counted from the top of the list, an image representing a broadcasting station such as TBS and, for example, the broadcasting station in the first row 85-1 and brief information on a content in the second row 85-2 are displayed.

Further, when a blue button is pressed in a state where focus is being applied to one row (row 73-4 in this example), a detailed display of the content in the selected row is produced in the content list-table display region 73. In this detailed display 91, a content number 91 a associated with the selected content, a title 91 b and a subtitle 91c of the content and a detailed description 91d are displayed based on the data structure as shown in Figures 2 and 3.

Thus, a user can perform display and operations relating to contents on the side region or the like while viewing and listening to a content in the image region. Therefore the invention is very convenient.

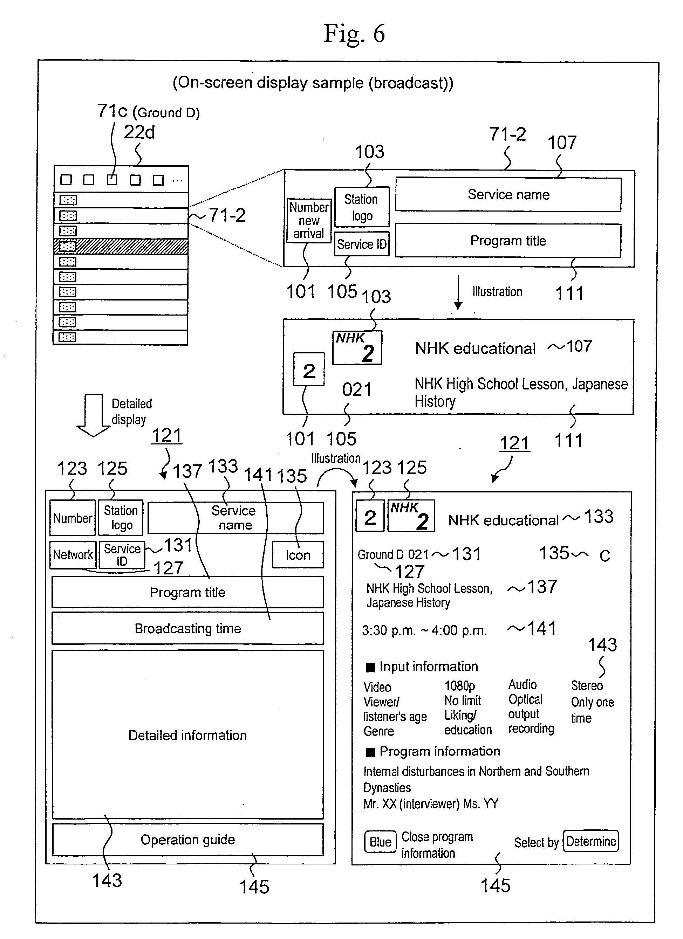

Figure 6 is a diagram showing an example of display of an on-screen table display in a case where broadcasts are selected as a content source to display a content list in table form. A case where the ground D button 71 c is selected in the source category display region 71 and a list of contents in ground digital broadcasts is displayed in the content list-table display region 73 will be described by way of example. In the row indicated at 73-2, details, an illustrative example of which is indicated by an arrow, are displayed. A number "2" is displayed as number new arrival display 101; a logo mark of a broadcasting station such as "NHK2", as station logo 103; a service ID such as "021", as service ID 105; a service name such as "NHK Educational", as service name 107; and a title such as "NHK High School Lesson, Japanese History", as program title 111. Shortest possible expressions of details are displayed such that an outline of each content in the list can be grasped at a glance. When an operation to produce a detailed display of a row to which focus is being applied is performed, the display is switched to detailed information on a broadcast content such as shown in the lower left figure, an illustrative example of which is shown in the lower right figure. For example, in this figure, "2" is displayed as number 123; "NHK2", as station logo 125; "NHK High School Lesson, Japanese History", as program title 137; and a time period from 3:30 p.m. to 4 p.m., as broadcasting time 141. Information on a video and an audio, a viewing/listening age limit, a number-of-video-recordings limit and further details of the content are displayed as detailed information 143. A guide, for example, as to what processing is performed by what button operation is displayed as an operation guide 145. These items of information are, basically, program information provided through broadcasting waves. An EPG or the like is also prepared based on such program information. When a content list is displayed, attaching to a content a mark indicating that the content is being viewed and listened to may be conveniently performed to enable the viewer/listener to know at a glance the content presently being viewed and listened to.

Figure 7 is a diagram showing an example of display of an on-screen table display in a case where net contents are selected as a content source to display a content list in table form. A case where the net button 71f is selected in the source category display region 71 and a content list of Internet contents is displayed in the content list-table display region 73 will be described by way of example.

In the row indicated at 73-2, details, an illustrative example of which is indicated by an arrow, are displayed. A number "2" is displayed as number display 151; a logo mark of an Internet source (e.g., an external server) such as "Y!", as service icon 153; an Internet site name such as "Oahoo!Japan For ΔQUOS, as title 157; and a subtitle such as "OahooJapan on TV too", as subtitle 161. Shortest possible expressions of details are displayed such that an outline of each Internet content in the list can be grasped at a glance.

When an operation to produce a detailed display of a row to which focus is being applied is performed, the display is switched to detailed information 171 on an Internet content such as shown in the lower left figure, an illustrative example of which is shown in the lower right figure. For example, in this figure, "2" is displayed as a number 173; "Y!" is displayed as station logo 175; and "(NEW) Updated" is displayed as a new arrival notice 177 to inform that the content is the latest one. A title 181 and a subtitle 183 are also displayed. As a detailed display, for example an update time 185, a service provider 187, details 191 including further details of the very content and details of a accompanying service and a guide as an operation guide 195, for example, as to what processing is performed by what button operation are displayed. These information items can be prepared basically in the same format as broadcasts based on contents information provided as an accompaniment for contents, as shown in Figures 2 and 3.

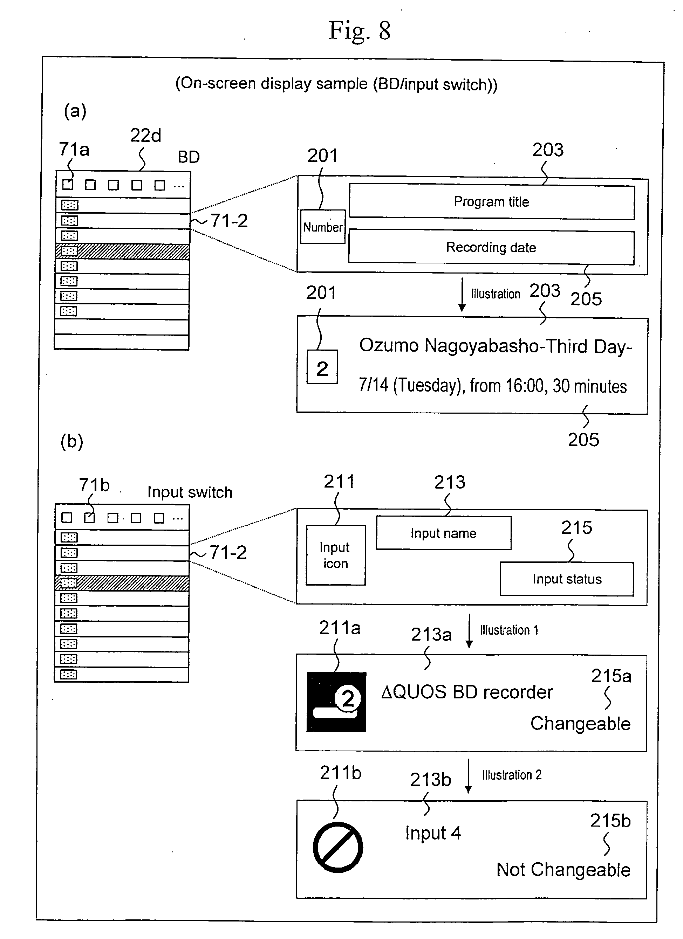

Figure 8(a) is a diagram showing an example of display of an on-screen table display in a case where contents provided by input switching from a BD recorder as an external device are selected as a content source to display a content list in table form. A connection between the digital broadcast receiving device and the external device may be made by means of a bidirectional communication cable in accordance with the HDMI standard. Examples of other external devices alternatively connectable are portable terminals, cameras, recorders and other devices in accordance with IRSS, which is a high-speed infrared communication standard, digital movie cameras, game machines and home electric appliances in a home network.

A case where the BD (input switch) button 71b is selected in the source category display region 71 and a content list of BD contents from the external device is displayed in the content list-table display region 73 will be described by way of example.

In the row indicated at 73-2, details, an illustrative example of which is indicated by an arrow, are displayed. A number "2" is displayed as number display 201; a program title name such as "Ozumo Nagoyabasho-Third Day-" is displayed as program title 203; and information, e.g., "7/14 (Tuesday), from 18:00, 30 minutes" is displayed as recording date and time 205 below the program title name. These information items are information recorded on a BD at the time of recording on the BD. A recording source may be displayed, for example, as "BS".

Figure 8(b) is a diagram showing another example of list display in a case where the input switch button 71 b is pressed. An icon for an input 2, as indicated at 211 a, for example, is displayed as input icon 211; ΔQUOS BD recorder 215a is displayed as input name 213; and "Changeable" 215a, for example, is displayed as input status 215. The input icon and so on may alternatively be such that the input icon 211b is a mark indicating non-permission, the input name 213b is input 4; and the input status 215b is "Not Changeable". Input switching between external devices is such that the number of kinds of devices can be increased to as large a number as possible. Therefore an expansion covering appliances in a home network is also possible.

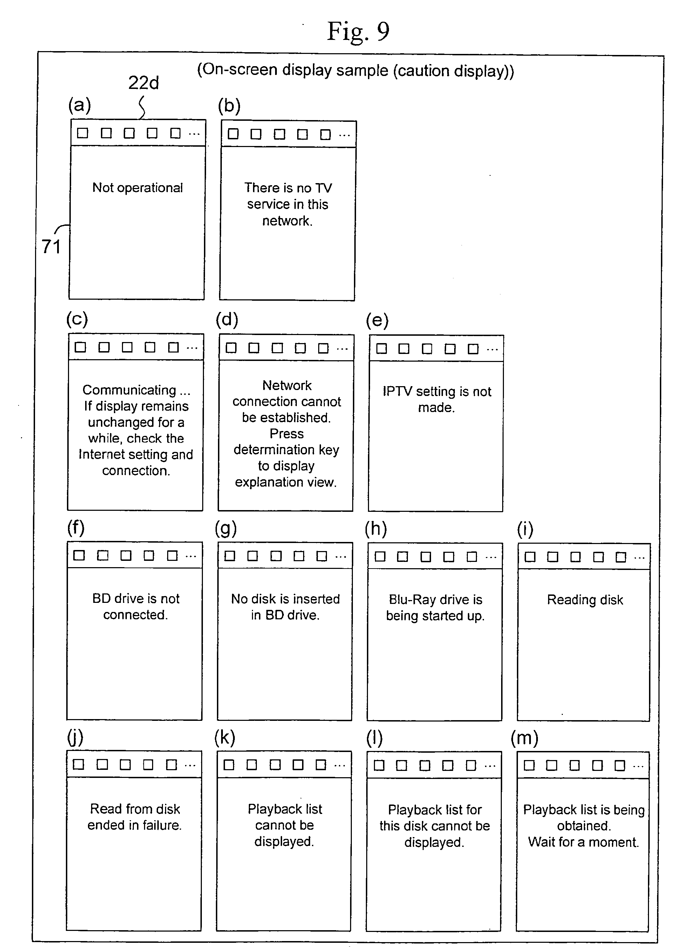

An example of display of caution displays in on-screen displays will be described. Figures 9(a) to 9(m) are diagrams showing examples of caution displays. Various caution displays can be produced in the list display region in the side region 22d. These caution displays are roughly divided into displays indicating that processing itself according to an operation purpose cannot be performed, displays for requesting a user to wait because of execution of processing presently performed. Each of the former displays informs the user of ineffectiveness of an operation or a need to connect an external device or the like. Each of the latter displays a display for requesting the user to wait for the completion of processing. These caution displays enable giving the user a feeling of ease.

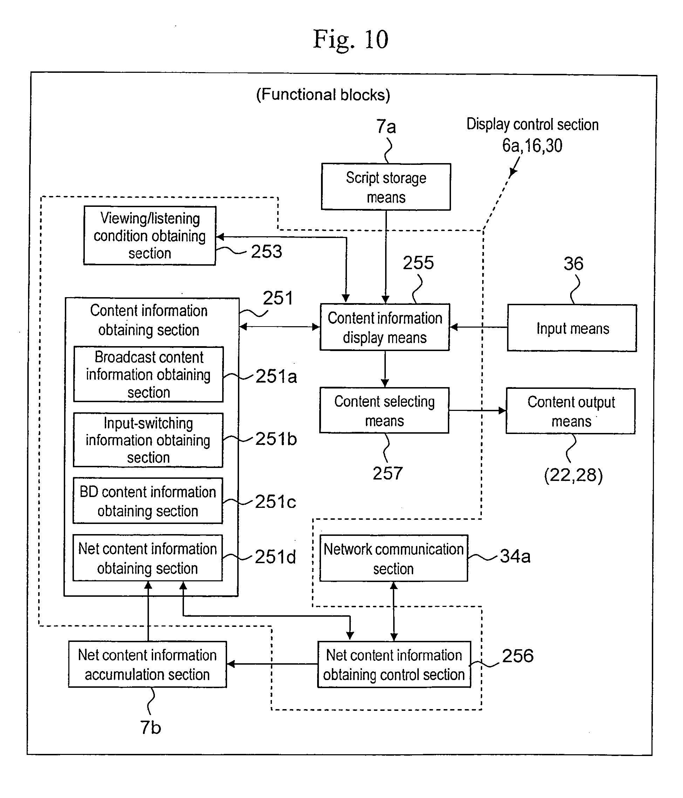

The content management/display device according to the present embodiment will be described in more detail. The content viewing/listening device according to the present embodiment includes net content information obtaining means for obtaining a list of Internet contents from the Internet, broadcast content information obtaining means for obtaining a broadcast content list received by the television receiving device (terminal device), input-switching content information obtaining means for obtaining an input-switching (connection in accordance with the HDMI standard or the like) content list, which is connectable to the television receiving device (terminal device), storage medium content information obtaining means for obtaining a content list from storage mediums (optical mediums such as BD and other mediums), content table display means that produces a table display of contents by executing a display script such as described above based on details of information obtained by the above-described obtaining means, and content processing selecting means that starts processing, for example for reproduction of contents based on an operation on the table display. Figure 10 is a functional block diagram in which the above-described means are expressed by functions relating to content list display in the functions of the content viewing/listening device according to the present embodiment including the display control section 6a, the content data management section 16 and the content metadata management section 26. The functional sections surrounded by the broken line are main sections that perform processing relating to content list display executed by a program such as shown in Figure 3. The script storage means 7a and the net content information storage section 7b are provided in the memory 7. A network communication section 34a, content output means (22 and 28) and input means 36 are the functions shown in Figure 1.

A content information obtaining section 251 includes a broadcast content information obtaining section (broadcast content information obtaining means) 251a that obtains information about broadcast contents from broadcasting waves, an input-switching content information obtaining section (input-switching input content information obtaining means) 251b that obtains contents from an external device by performing input switching, a BD content information obtaining section (storage medium content information obtaining means) 251c that obtains information on BD contents from a recording medium such as a BD, and a net content information obtaining section 251d. The net content information obtaining section (net content information obtaining means) 251d obtains information on net contents through the network communication section 34a under the control of a net information obtaining control section 256. The obtained network content information is stored in the net content information storage section 7b. The net content information obtaining section 251 d obtains this information. Information on a content contains a broadcasting station or channel ID for a destination to be accessed for the content if the content is a broadcast, or a URL for an external content server if the content is a net content. Even in a case where a net content is temporarily stored, for example, in the memory of the content viewing/listening device, holding information on a URL for an external content server from which the content is obtained enables, when information on the net content is updated, the net content information stored in the memory or the like to be easily updated.

From content information obtained in the content information obtaining section 251 as described above and a viewing/listening state from a viewing/listening state obtaining section 253, a content list is displayed as content information, for example, in the above-described way in content information display means (content-table display means) 255 by using the script stored in the script storage means 7a. Further, through the content output means (22, 28), a content selected in content selecting means 257 according to an input event from the input means 36 input by the user while referring to the content list (menu display) is output (corresponding to the content processing selecting means).

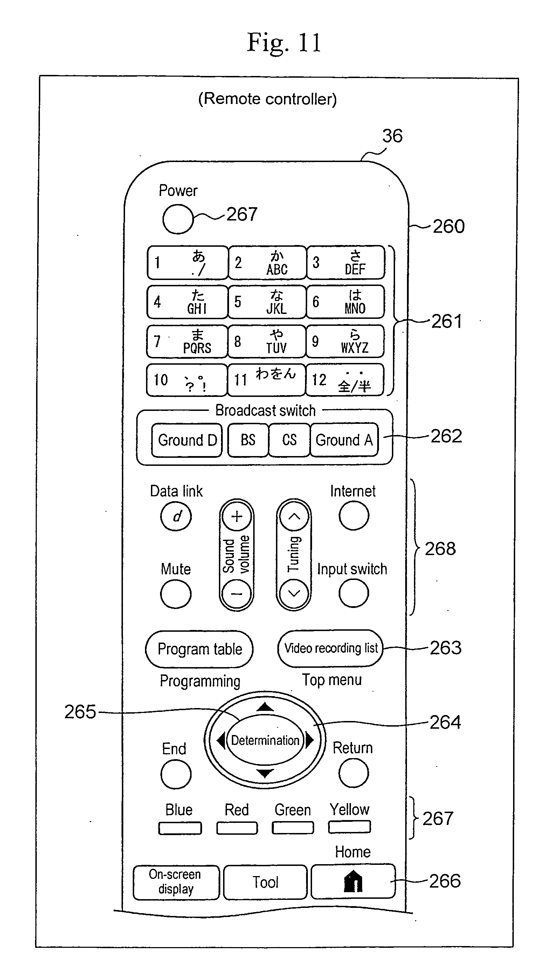

Figure 11 is a diagram showing an example of appearance construction of the remote control unit 36. The remote control unit 36 has a plurality of operating buttons provided in a surface of a casing 260; there are provided a power button 267, numeral/letter input buttons 261, broadcast switch buttons 262, input switch, internet connection, data link, sound volume, and channel selecting buttons 268, a video recording list display button, a program table display button 263, a directional key 264, a determination key 265, four color keys 267 to which functions can be assigned, and image display, tool and home buttons 266. The home button 266 functions as a button for switching between a content list display mode and a full-screen viewing/listening mode such as those described above. With a left-right key in the directional key 264, a source category button 71n in the source category display region 71 in Figure 5 can be selected. With a top-bottom key in the directional key 264, a cursor can be moved between the source category display region 71 and the content list display region 73n. With the determination key, an item on which the cursor in a selecting state is applied can be executed.

Processing for each function performed based on the above-described hardware and software configurations will be described below.

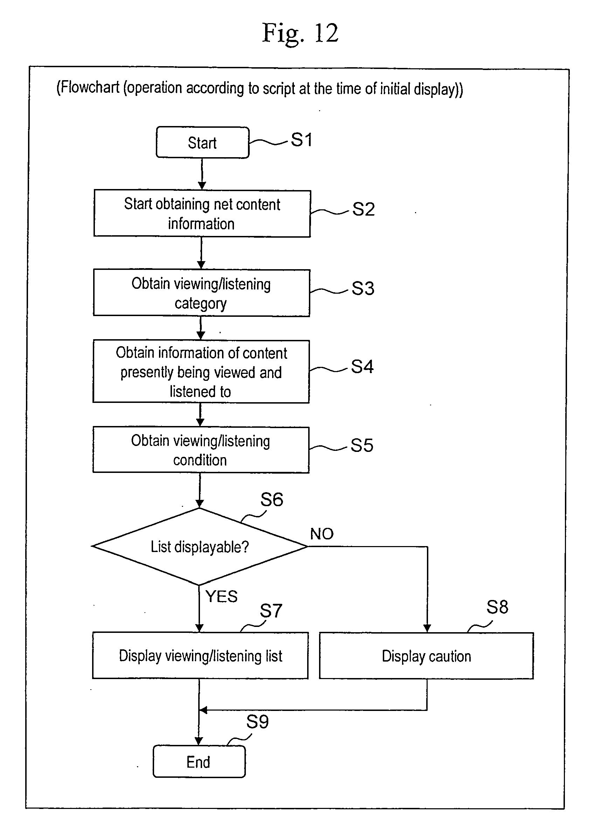

In processing shown in Figure 12 and described below, processing is performed in a sequence: obtaining net information, then obtaining a viewing/listening category, and obtaining information on a content viewed and listened to. Net content is first obtained on the assumption that a state where a list display of other contents can be produced is already established.

Figure 12 is a flowchart showing the flow of operation according to the script at the time of initial display. First, in step S1, when the menu button (top menu) of the remote control is pressed, processing for obtaining net content information is triggered to start in step S2. As described above, the net content information obtained here includes information on a URL for a network server to be accessed in a state of being associated with the net content. Obtaining processing is performed for each kind of content (source category). In step S3, a viewing/listening category as to which of the source categories has been selected is obtained. In step S4, content information on a content presently being viewed and listened to is obtained. In step S4, a viewing/listening state is obtained. For example, information indicating viewing and listening to BS1 is obtained. Subsequently, in step S6, determination is made as to whether or not list display can be performed. In the case of YES (success), a list about the content presently being viewed and listened to is displayed and processing is terminated (step S9). In the case of NO (failure) in step S6, a caution display indicating corresponding information (see Figure 9(h)) is produced in step S8 and the process advances to step S9. Thus, when the operation to perform list display is detected, information on the content presently being viewed and listened to is obtained and list display is performed if possible. When the button for a different source category is pressed, the same processing for performing list display of the source category is executed.

It is preferable that with respect to the other contents including broadcast contents, DB contents and input-switching contents, content information already made list-displayable, e.g., program information capable of displaying items including station logo 103, service ID 105, service name 107 and program title 111 shown in Figure 6 about broadcast contents is obtained by the broadcast content information obtaining section shown in Figure 10 before step S1, and stored in the memory to be ready for list display at any time. A list display such as shown in Figures 6 and 7 can be produced by using these information items and the net content information newly obtained.

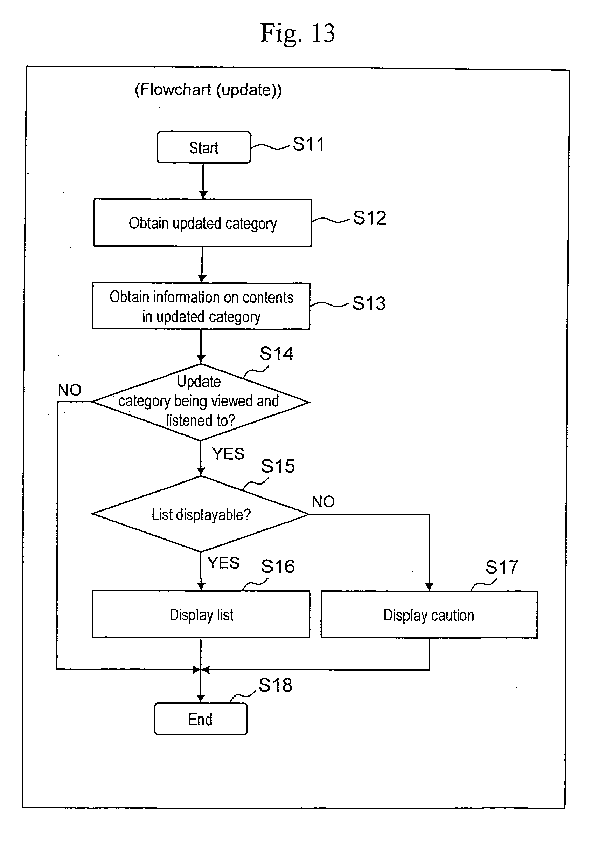

Figure 13 is a flowchart showing the flow of processing for updating a list display of a source category. There is a substantial possibility of Internet contents in particular being frequently updated. As shown in Figure 13, when processing is started (step S11) (processing may be automatically started upon detecting an update, and the existence/nonexistence of an update may be periodically monitored), an updated content category is obtained in step S12. Description will be made by assuming that the net content category, for example, has been updated. In step S 14, determination is made as to whether or not the content presently being viewed and listened to belongs to the updated category. If the content does not belong to the updated category (NO), update processing is terminated (step S 18). If the content does not belong to the updated category (YES), the process advances to step S 15 and determination is made as to whether or not a content list can be displayed. If a content list can be displayed (YES), the process advances to step S16 and the list is displayed. The process then advances to step S 18. If list display cannot be performed, the process moves to step S 17 and a caution display such as shown in Figure 9(k), indicating that list display is impossible, is produced in step S 17. The process thereafter advances to step S18 and update processing is terminated.

Possibility/impossibility of list display can be determined as described below.

The following are cases in which list display is impossible. Determination is made as to coincidence/noncoincidence with either of the following cases, thereby determining possibility/impossibility of list display.

1) A case where no item exists to be displayed in a list, e.g., a case where the antenna cable is unconnected and ground D program information cannot be taken.
The situation shown above in 1) is recognized from whether or not the number of content information items obtainable from the content information obtaining section 251 is 0.

2) A case of dependence on an inhibition condition on a terminal, corresponding to, for example, a case where a net content list cannot be displayed during recording on a BD. This condition is determined by the viewing/listening state obtaining section 253.

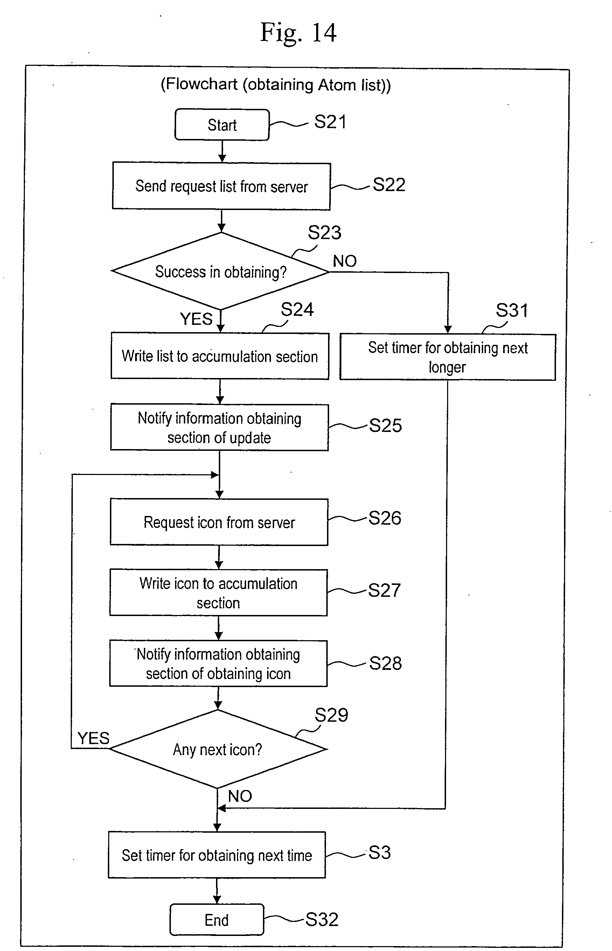

Figure 14 is a diagram showing the flow of display processing accompanied with an update, i.e., a flowchart showing the flow of processing including obtaining a provider (content server) that provides contents such as shown in Figure 3.

A content list in which content list update intervals are described as Internet content list update timing, and which is periodically updated according to the descriptions shown in Figure 3 is obtained.

Upon powering on, processing for obtaining a content list is started (step S21) and the net content information obtaining section 251 d in the content information obtaining section 251 shown in Figure 10 requests transmission of the list of net contents from the content server described in the URL in the header of the content list 61 shown in Figure 3 (step S22). In the case of success in obtaining the list (YES in step S23), the process advances to step S24. In the case of failure to obtain the list (NO in step S23), the process moves to step S31.

In step S24, writing to the net content information storage section 7b is performed. In step S25, a notice of the update is sent to the net content information obtaining section 251d in the content information obtaining section 251. By processing to this stage, the list of contents (characters) is obtained.

In step S26, a request for an icon for a content from the content server is made. In step S27, the icon for the content is written to the net content information storage section 7b. In step S28, a notice of the completion of obtaining the icon for the content is sent to the net content information obtaining section 251d. In step S29, determination is made as to whether or not the next icon to be obtained exists. If the next icon exists (YES), the process returns to step S26 and processing is repeated to obtain the next icon. If there is no next icon (NO in step S29), the process advances to step S30, a timer for obtaining next time is set and processing is terminated (step S32). In the case of moving to step S31, the timer for obtaining next time is set longer in comparison with the present setting so that it is easier to obtain the list, and the present processing is terminated (step S32). Thus, in the case of failure to obtain the content list, the interval before obtaining next time is set longer to facilitate obtaining the content list.

When the menu key is pressed to produce the menu display, however, obtaining processing is again performed even in the case where the interval before obtaining next time is extended, because pressing of the menu key is a condition for starting obtaining with priority.

Setting obtaining of the content list (character display) and obtaining of icons in this order enables earlier display of the character list. That is, when the notice of the update is sent to the net content information obtaining section 251d in the content information obtaining section 251 in step S25, the notice of the update is further sent from the net content information obtaining section 251d to the content information display means 255. The updated character information is first displayed thereby.

Thereafter, when the notice of the completion of obtaining of the icon is sent to the net content information obtaining section 251d in step S28, the notice of the update is further sent from the net content information obtaining section 251 d to the content information display means 255 and the obtained icon data is displayed.

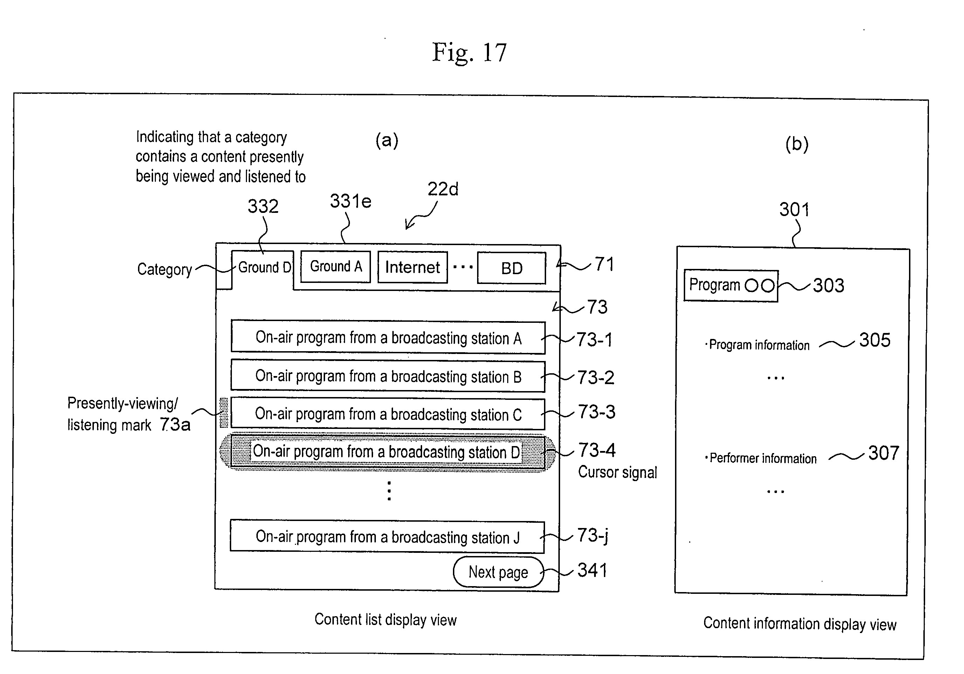

Description will be made of display operation transition in a case where a content menu is started and a category change is made. A current mark is displayed with respect to a content presently being viewed and listened to. In a case where there are a plurality of pages for one category, the page containing the content presently being viewed and listened to is displayed. Figure 17 is a diagram showing an example of a display operation in a case where a content list display as a content menu displayed in the side region 22d of the display section in the content viewing/listening device according to the present embodiment is produced. There are provided a source category display region 71 in which a number of buttons for displaying content lists with respect to the categories of sources of contents are provided as a GUI, and a content list-table display region 73 (73-1 to 73-n) in which a table (list) display of contents from one of the source categories selected in the source category display region 71 is produced, for example, in a region below the source category display region 71.

Referring to Figure 17(a), the source category display region 71 in which a number of buttons for displaying content lists with respect to the categories of sources of contents are provided as a GUI, and the content list-table display region 73 (73-1 to 73-n) in which a table (list) display of contents from one of the source categories selected in the source category display region 71 is produced in a region below the source category display region 71. Content data is managed in the content data management section 16 shown in Figure 1, and content metadata is managed in the content metadata management section 26 shown in Figure 1. The content metadata is groups of information relating to contents and including content names, author names, and, with respect to broadcasts, broadcasting stations, and broadcasting time periods, program information and performer information.

In this example, a list of programs in ground digital broadcasts is displayed by a ground digital broadcast (ground D) button or tab 331e. A presently-viewed/listened-to-category mark 332 attached to the ground digital broadcast (ground D) button or tab 331e is a mark indicating that a content presently being viewed and listened to belongs to the designated category.

When the user displays, in the content menu, information (list display, detailed display) on a category different from the category of a content presently being viewed and listened to by the user, the presently-viewed/listened-to-category mark 332 indicates the category of the content presently being viewed and listened to by the user. The user is thereby enabled to easily identify the category of the content through the on-screen view. Therefore this indication is convenient.

In the displayed content list, an on-air program 73-1 from a broadcasting station A, an on-air program 73-2 from a broadcasting station B, an on-air program 73-3 from a broadcasting station C, an on-air program 73-4 from a broadcasting station D, ..., and an on-air program 73-j from a broadcasting station J are displayed in order from the top on the first page. A presently-viewing/listening mark 73a is attached to the on-air program 73-3 from the broadcasting station C to indicate that this program (content) is presently being viewed and listened to. In a case where a content list of one category extends over a plurality of pages, the page containing a content presently being viewed and listened to is displayed. When the user selects a content to view and listen to in the content viewing/listening device, therefore, the user can select while grasping what content he or she is presently viewing and listening to. Thus, the content viewing/listening device has the advantage of enabling the user to comfortably operate the device. The presently-viewing/listening mark 73a is only an example. Any other means not restricted in form may suffice if it produces a display in a visually recognizable form, for example, a highlighting display indicating that the marked program (content) is presently being viewed and listened to. In this point, the same can be said with respect to the presently-viewed/listened-to-category mark 332. For discrimination (identification) of a program presently being viewed and listened to, a content identifier or the like may be stored in the memory 7.

The presently-viewing/listening mark 73a is a mark attached independently of a program on which the cursor is applied (on-air program 73-4 from broadcasting station D in this example). When the mark 73a is attached to a program, it explicitly indicates that the program is being displayed in the video area 22a. When the determination button on the remote control is pressed while applying the cursor on the different program on which the cursor has been set, the program is set in the state of being presently being viewed and listened to, and the mark 73a is also attached to the program.

A next-page mark 341 is provided on the displayed view. In a case where in a certain content category, e.g., ground digital broadcasts, many program exists, there is a substantial possibility of a list display being unable to be displayed on one page. In such a case (a case where a set number of pages, e.g., five or ten pages is exceeded), it is preferable that a list display be produced by being divided into portions on a plurality of pages. In such a case, a list display on the next page can be produced by pressing the next-page button 341. Further, the next page button is provided on the next page if another next page exists. A previous-page button as a button for returning to the previous page is also displayed on the next page. Page number buttons may alternatively be provided to enable a move to the desired page. Thus, in contrast with the conventional arrangement in which a program presently being viewed and listened to is displayed at the uppermost position in a list, a program presently being viewed and listened to can be made known while the construction of a list is maintained.

It is possible to know programs in other broadcasting stations by pressing the next-page button 341. Even when a transition is made between pages, the presently-viewing/listening mark 73a and presently-viewed/listened-to-category mark 332 are not changed, as long as the program presently being viewed and listened to is not changed.

Also, when detailed display is executed in a state where the cursor is placed on the on-air program 73-4 from the broadcasting station D as shown in Figure 17(a) (for example, by pressing a detailed information display button not shown in the figure on the displayed on-screen view shown in Figure 17(a), detailed information about the content is displayed. That is, as shown in Figure 17(b), a display is produced based on metainformation on the on-air program 73-4 from the broadcasting station D managed by the metainformation management section, and the on-screen display is changed from the list display to a detailed display 301 in which detailed information on the content is displayed. From the detailed display 301, it is also possible to know, for example, a program name 303, program information 305 and performer information 307 with respect to programs other than the program presently being viewed and listened to. In such a case, it is possible to know even details of the information on the other programs while display of the program presently being viewed and listened to is being continued. Even when the display is returned from this detailed display to the list display, the presently-viewing/listening mark 73a and presently-viewed/listened-to-category mark 332 are not changed. That is, as long as the program presently being viewed and listened to is not changed, the list construction and the marks are not changed.

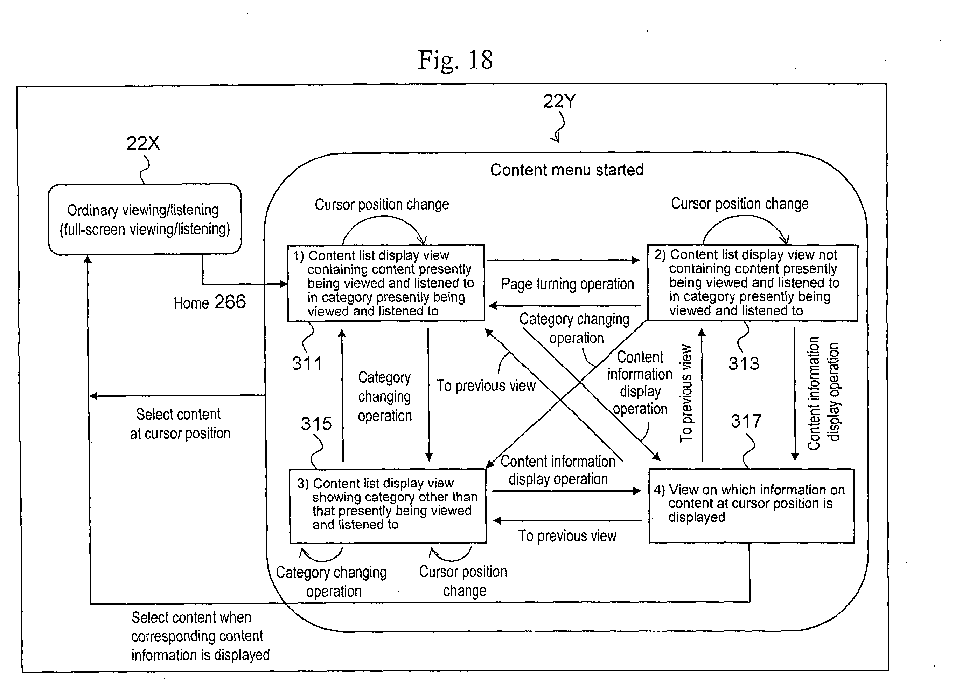

Figure 18 is a state transition diagram showing characteristic operations in the content viewing/listening device according to the present embodiment. As shown in Figure 18, the display is switched (changed) by a remote control operation or the like between an ordinary viewing/listening state (full-screen display (viewing/listening), i.e., a state in which a content is viewed and listened to through the full screen of the display section) 22x and a content menu started state (i.e., a state in which a content menu is displayed in an empty region produced by scaling the content display view) 22y. For example, when the home button 266 of the remote control unit is pressed, a switch from the ordinary viewing/listening 22x to the content menu started state 22y is made. Since the content menu is displayed in an empty region produced by scaling the content display view, content viewing/listening itself is not interrupted. When the content at the cursor position is selected and determined in the content menu started state 22y, a transition from the content menu started state 22y to the ordinary viewing/listening 22x is made.

In the content menu started state 22y, transitions are made mainly between four states. The first state 311 is a state in which a content list including a content presently being viewed and listened to in a category presently being viewed and listened to is displayed on the on-screen view (the state shown in Figure 17(a)). The second state 313 is a state in which a content list not including the content presently being viewed and listened to in the category presently being viewed and listened to is displayed on the on-screen view (a state in which, in relation to the state shown in Figure 17(a), the presently-viewing/listening mark 73a is attached to none of the contents in the list display, while the category to which the presently-viewed/listened-to-category mark 332 is attached is selected). The third state 315 is a state in which a content list of contents in a category other than that presently being viewed and listened to is displayed on the on-screen view (a state in which, in relation to the state shown in Figure 17(a), a category to which the presently-viewed/listened-to-category mark 332 is not attached is selected). The fourth state 317 is a state in which information on a content at the cursor position is displayed (the state shown in Figure 17(b)).

The first state 311 is maintained even when the cursor position is changed. When the next-page button is pressed, a page turning operation is performed to make a transition to the second state. The second state 313 is also maintained even when the cursor position is changed. When the previous page button (a return button or the like) is pressed, a page turning operation is performed to cause a return to the first state. "When an operation to move the cursor downward is performed in a state where the cursor is at the lowest position" (when an operation to move the cursor is performed in a state where the cursor is at the highest position" in the case of return to the previous page), that is, by performing an operation such as to successively move the cursor, page turning processing can also be performed.

Between the second state 313 and the fourth state 317, when a content information displaying operation is performed in the second state 313, a transition to the fourth state 317 is made. When an operation to make a return to the previous view is performed, a return from the fourth state 317 to the second state 313 is made. When the content is selected in the fourth state 317 while content information is being displayed, the content displayed with the content information is selected and a return to the normal viewing/listening 22x is made.

Between the third state 315 and the fourth state 317, when a content information displaying operation is performed in the third state 315, a transition to the fourth state 317 is made. When an operation to make a return to the previous view is performed, a return from the fourth state 317 to the third state 315 is made. Even when a cursor position changing operation or a category changing operation is performed in the third state 315, the third state is maintained. Between the third state 315 and the first state 311, when a category changing operation is performed in the third state 315, a transition to the first state 311 is made. When a category changing operation is performed in the first state 311, a transition to the third state 315 is made.

Further, between the first state 311 and the fourth state 317, when a content information displaying operation is performed in the first state 311, a transition to the fourth state 317 is made. When an operation to make a return to the previous view is performed, a return from the fourth state 317 to the first state 311 is made.

From the second state 2) to the third state 3), a transition is made by a category changing operation. In the case of transition in the reverse direction from the third state 3) to the second state 2), a transition via the first state 1) is made. That is, no direct transition from the third state 3) to the second state 2) is made.

Characteristic points relating to Figure 18 described above are summarized below.

1) First, "when a transition to the category of a content presently being viewed and listened to is made in moving between categories, a page containing a content presently being viewed and listened to is displayed. This point corresponds to the point that a transition can be made only through the first state 1) in the case of transition from the third state 3) to the second state 2). That is, a transition is not made from a list display view for any category other than a category presently being viewed and listened to to a content list display view containing no list display of a content presently being viewed and listened to in the category presently being viewed and listened to. In other words, when a transition to the category of a content presently being viewed and listened to is made in moving between categories, a page containing a content presently being viewed and listened to is displayed.

2) In the case of transition from the fourth state 4) to one of the first to third states 1) to 3), only a return to the original view is made, as indicated by "To previous view" in Figure 18. Detailed information display in the fourth state 4) and the list display view containing the content presently being viewed and listened to are not particularly associated with each other (a transition from the fourth state 4) to any of the first to third states 1) to 3) is possible and made by returning to the transition-starting-pint view.

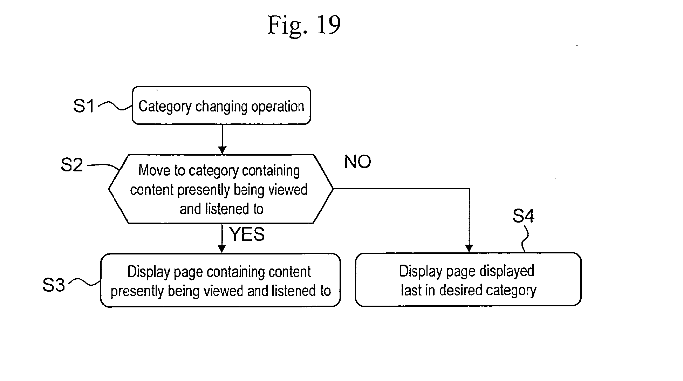

Figure 19 is a flowchart showing the flow of processing for a category changing operation. When a category changing operation is performed in step S1, determination is made in step S2 as to whether or not the change is to a category containing a content presently being viewed and listened to. If YES, the process advances to step S3 and a page containing the content presently being viewed and listened to is displayed. If NO, the process moves to step S4 and a page displayed last with respect to the desired category is displayed. Thus, a category changing operation for a category different from that presently being viewed and listened to involves storing a page before the change in the memory. The page is displayed by referring to the memory when it is to be next displayed.

As described above, the content viewing/listening device according to the present embodiment is capable of displaying contents usable in a terminal device such as a television set, including Internet contents, and selecting from the contents by a unified operation. The content viewing/listening device has the advantage of facilitating grasping contents that can be viewed and listened to at the time of selecting and making a selection from the contents. In the case of using a program table (content list) while viewing and listening to a content such as a TV program, the user can know which program (content) he or she is presently viewing and listening to by referring to the program table (content list). Also in the case of making a page to page transition or return, easy-to-see page display is maintained, which is useful in selecting a content to be viewed and listened to and in performing an operation on a content.

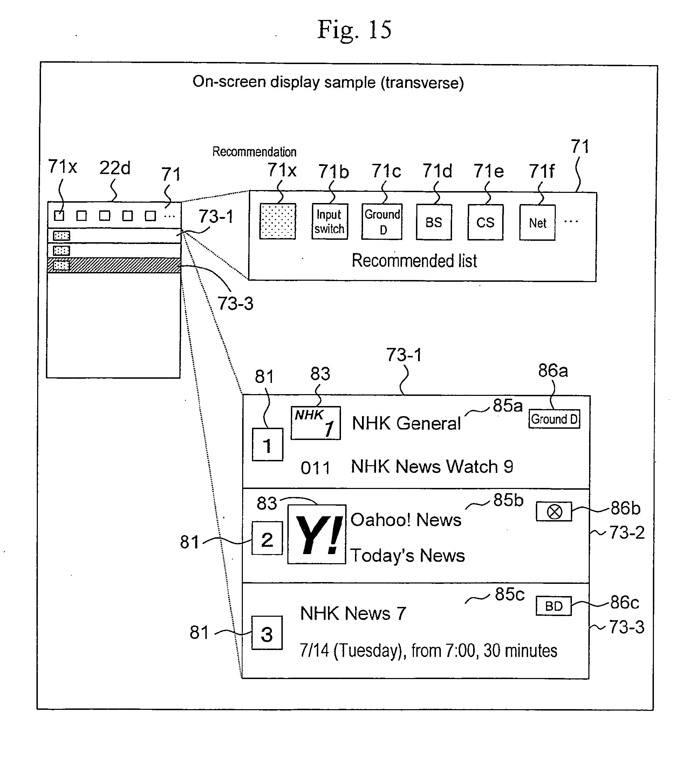

A content viewing/listening device according to a second embodiment of the present invention will be described with reference to the drawings. Figure 15 is a diagram showing a menu in a list display in the content viewing/listening device according to a second embodiment of the present invention. A button 71a for displaying a recommended list containing recommended contents is provided as well as content selecting buttons 71 to 71f in the content category display region 71 to enable producing a list display by widely changing categories independently of content sources in performing the above-described processing in the content viewing/listening device according to the first embodiment. The recommendation button 71x is provided and, when this button is pressed, recommended contents from different source categories, such as a broadcast content (number 81a, icon 83a, letters 85a, and content category icon 86a) in line 73-1, a net content (number 81b, icon 83b, letters 85b, and content category icon 86b) in line 73-2, and a another broadcast content (number 81c, icon 83c, letters 85c, and content category icon 86c) in line 73-3, as in a list display indicated by reference numeral 83, can be displayed in table form. In a list containing contents from different content sources, the content sources can be explicitly indicated by content category icons.

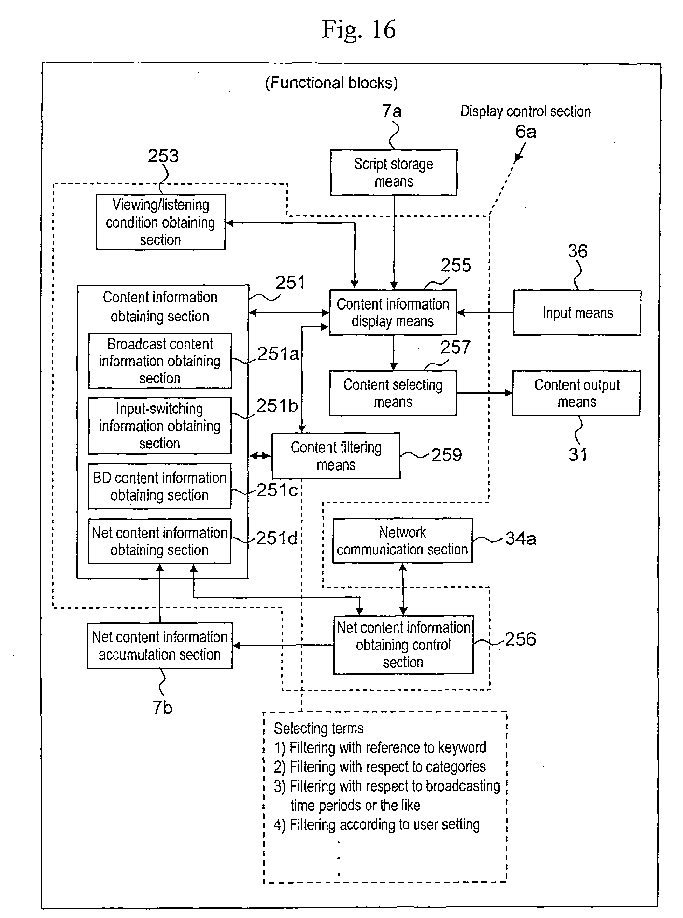

Figure 16 is a functional block diagram of the content viewing/listening device according to the present embodiment. Figure 16 corresponds to Figure 10. A point of difference resides in that content filtering means 259 is provided in addition to the configuration shown in Figure 10. For an algorithm for selecting recommended contents, a well-known method based on a user's liking or the like can be used. The algorithm is not restrictively specified. However, for example, 1) filtering with reference to a keyword, 2) filtering with respect to detail categories determined from titles of contents, 3) filtering with respect to broadcasting time periods, and 4) filtering according to a user setting, e.g., filtering for selecting only net contents and ground digital may be mentioned as content selecting terms.

Thus, the content viewing/listening device according to the present embodiment is capable of producing a wide-selection list display independently of content source categories.

As described above, according to each embodiment of the present invention, contents from a number of content sources including Internet contents, usable in the content viewing/listening device, are displayed in table form a desired one of the contents to be viewed and listened to can be selected by a unified operation. Advantageously, therefore, an operation to grasp viewable and listenable contents at the time of selecting and to make a selection from the contents can be easily performed.

The content viewing/listening device and the content display device according to the present invention can be applied to portable terminal devices such as portable wireless communication devices and can also be applied to TV functions added to PCs or the like.

A program that runs on the devices according to the present invention may be a program for controlling a CPU (Central Processing Unit) or the like so as to realize the functions of the above-described embodiments according to the present invention (a program for making a computer function). Information handled on these devices is temporarily stored in a RAM (Random Access Memory) at the time of processing on the information, is thereafter stored in any of various ROMs such as a flash ROM (Read Only Memory) or an HDD (Hard Disk Drive), and is read to the CPU, modified and written as required.

Also, a program for realizing the functions of components such as those shown in Figure 1 may be recorded on a computer-readable recording medium, and processings in the sections may be performed by reading the program recorded on the recording medium to a computer system and by executing the programs. The "computer system" referred to here is assumed to include an OS and pieces of hardware such as peripheral devices.

Also, as the "computer-readable recording medium", a portable medium such as a flexible disk, a magneto-optical disk, a ROM, or a CD-ROM, or a storage device such as a hard disk incorporated in the computer system may be referred to. Further, the "computer-readable recording medium" also comprises a medium that dynamically holds a program for a short time period, e.g., a communication line in the case of transmitting the program over a network such as the Internet or a communication circuit such as a telephone circuit, and a medium that holds the program for a certain time period, e.g., a volatile memory in a computer system functioning as a server or a client in that case. The above-described program may be program for realizing part of the above-described functions or a program capable of realizing the above-described functions in combination with a program already recorded in the computer system.

The embodiments of the present invention have been described in detail with reference to the drawings. However, concrete configurations of the invention are not limited the embodiments. Inventions made, for example, by changing the design without departing from the scope of the present invention are also included in the present invention.

### Industrial Applicability

The present invention can be used in a content viewing/listening device.

All the publications, patents and patent applications cited in this specification are taken as a reference in this specification without being changed.

## Claims

1. A content viewing/listening device for viewing and listening to contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and displays the content list so that the content list is divided into portions on a plurality of pages if the content list cannot be displayed on one page.

2. A content viewing/listening device for viewing and listening to contents, comprising a category-by-category content information obtaining section that obtains content information with respect to each of content categories that are kinds of viewable and listenable contents, and a content information display control section that performs control to display a content list on a content display section with respect to each of the content categories based on the content information with respect to each of the content categories obtained in the category-by-category content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and displays the content list so that the content list is divided into portions on a plurality of pages if the content list with respect to one of the content categories cannot be displayed on one page.

3. The content viewing/listening device according to claim 1 or 2, wherein the content information display control section maintains among the plurality of pages a page construction in which the presently-viewed/listened-to-content display is produced.

4. The content viewing/listening device according to any one of claims 1 to 3, wherein the content information display control section displays the content list in an empty region formed by scaling a viewing/listening region in the display section, is capable of switching to or from a full-screen display, and updates the presently-viewed/listened-to-content display to a content at a cursor position at the time of switching to the full-screen display.

5. A content viewing/listening device for viewing and listening to contents, comprising a category-by-category content information obtaining section that obtains content information with respect to each of content categories that are kinds of viewable and listenable contents, and a content information display control section that performs control to display a content list on a content display section with respect to each of the content categories based on the content information with respect to each of the content categories obtained in the category-by-category content information obtaining section,
wherein the content information display control section displays content category buttons for producing a list display with respect to each of the content categories, displays the content list with respect to each of the content categories associated with the content category buttons, and produces, on the category button for the category corresponding to a content presently being viewed and listened to, a presently-viewed/listened-to-content-category display in such a form as to be visually recognizable and to indicate that the category corresponds to the content presently being viewed and listened to.

6. The content viewing/listening device according to claim 5, wherein the content information display control section produces, in the content list, on the content presently being viewed and listened to, the presently-viewed/listened-to-content display in such a form as to be visually recognizable and to indicate that the content is presently being viewed and listened to.

7. The content viewing/listening device according to claim 5 or 6, wherein the content information display control section maintains the presently-viewed/listened-to-content-category display among the plurality of categories.

8. The content viewing/listening device according to any one of claims 5 to 7, wherein the content information display control section displays the content list in an empty region formed by scaling a viewing/listening region in the display section, is capable of switching to or from a full-screen display, and updates the presently-viewed/listened-to-content display to a content at a cursor position at the time of switching to the full-screen display.

9. The content viewing/listening device according to any one of claims 5 to 8, wherein the content categories are discriminated by means of content sources that are sources from which contents are obtained.

10. The content viewing/listening device according to any one of claims 5 to 9, wherein the content groups include an optical disk medium, broadcasting and input switching of an external device.

11. The content viewing/listening device according to any one of claims 2 to 10, wherein the content information obtaining section includes a content information obtaining section that obtains content information including information on sources from which the contents in the content groups obtained from the content viewing/listening device are obtained, and a net content information obtaining section that obtains net content information on net contents obtained via the Internet, including a URL of a net content server, and
wherein the content information display control section performs control for producing one menu display into which content lists based on the groups of content information obtained by the content information obtaining section and a net list based on the net content information obtained by the net content information obtaining section are unified.

12. A content viewing/listening device for viewing and listening to the contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of returning after making a transition to a page on which detailed information about a content selected from the content list is displayed, the content information display control section performs control so that a page construction in which the presently-viewed/listened-to-content display is produced is maintained.

13. A content viewing/listening device for viewing and listening to the contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of making a transition to the category of the content presently being viewed and listened to in moving between the categories, the content information display control section performs control so that a page containing the content presently being viewed and listened to is displayed.

14. A content viewing/listening device for viewing and listening to contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to, and performs control so that no transition is made from a list display view for any of the categories other than the category presently being viewed and listened to to a content list display view not containing any list display of the content presently being viewed and listened to in the category presently being viewed and listened to.

15. A content viewing/listening device for viewing and listening to contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of making a transition to the category of the content presently being viewed and listened to in moving between the categories, the content information display control section performs control so that a page containing the content presently being viewed and listened to is displayed.

16. A content viewing/listening device for viewing and listening to contents, comprising a content information obtaining section that obtains content information, and a content information display control section that performs control to display a content list on a content display section with respect to each of the content categories based on the content information obtained in the content information obtaining section,
wherein upon receiving an instruction to display the content list, the content information display control section produces, on a content presently being viewed and listened to, a presently-viewed/listened-to-content display in such a form as to be visually recognizable and to indicate that the content is presently being viewed and listened to; and, at the time of returning after making a transition to a page on which detailed information about a content selected from the content list is displayed, the content information display control section performs control so that a return to a transition-starting-point content list display view is made.

17. A content list display method comprising a content information obtaining step of obtaining content information in a content viewing/listening device for viewing and listening to contents, and a content information display control step of performing control to display a content list on a content display section with respect to each of the content categories based on the content information obtained in the content information obtaining step,
wherein the content information display control step includes a step of producing, upon receiving an instruction to display the content list, on a content presently being viewed and listened to, a presently-viewed/listened-to-content display in such a form as to be visually recognizable and to indicate that the content is presently being viewed and listened to, and displaying the content list so that the content list is divided into portions on a plurality of pages if the content list cannot be displayed on one page.

18. A content list display method comprising a content information obtaining step of obtaining content information with respect to each of content categories that are kinds of contents viewable and listenable in a content viewing/listening device for viewing and listening to contents, and a content information display control step of performing control to display a content list on a content display section with respect to each of the content categories based on the content information with respect to each of the content categories obtained in the content information obtaining step,
wherein the content information display control step includes a step of producing, on a content presently being viewed and listened to, a presently-viewed/listened-to-content display in such a form as to be visually recognizable and to indicate that the content is presently being viewed and listened to, and displaying the content list so that the content list is divided into portions on a plurality of pages if the content list with respect to one of the content categories cannot be displayed on one page.

19. A content list display method comprising a content information obtaining step of obtaining content information with respect to each of content categories that are kinds of contents viewable and listenable in a content viewing/listening device for viewing and listening to contents, and a content information display control step of performing control to display a content list on a content display section with respect to each of the content categories based on the content information with respect to each of the content categories obtained in the content information obtaining step,
wherein the content information display control step includes a step of displaying content category buttons for producing a list display with respect to each of the content categories, displaying the content list with respect to each of the content categories associated with the content category buttons, and producing, on the category button for the category corresponding to a content presently being viewed and listened to, a presently-viewed/listened-to-content-category display in such a form as to be visually recognizable and to indicate that the category corresponds to the content presently being viewed and listened to.

20. A content list display method comprising a content information obtaining step of obtaining content information in a content viewing/listening device for viewing and listening to contents, and a content information display control step of performing control to display a content list on a content display section with respect to each of the content categories based on the content information obtained in the content information obtaining step,
wherein the content information display control step includes producing, upon receiving an instruction to display the content list, on a content presently being viewed and listened to, a presently-viewed/listened-to-content display in such a form as to be visually recognizable and to indicate that the content is presently being viewed and listened to, and performing control so that no transition is made from a list display view for any of the categories other than the category presently being viewed and listened to to a content list display view not containing any list display of the content presently being viewed and listened to in the category presently being viewed and listened to.

21. A program for making a computer execute the content list display method according to any one of claims 17 to 20.

22. A computer readable recording medium on which the program according to claim 21 is recorded.
